# EUROPEAN PATENT APPLICATION

(11) **EP 4 525 363 A1**
(43) Date of publication of application: **19.03.2025**
(21) Application number: 23829996.0
(22) Date of filing: 15.06.2023
(51) Int. Cl.: H04L 9/40, G06F 11/30

(54) **MESSAGE PROCESSING METHOD AND ELECTRONIC DEVICE**

(30) Priority: 30.06.2022 CN 202210761580
(71) Applicant: Huawei Technologies Co., Ltd., Shenzhen, Guangdong 518129 (CN)
(72) Inventor: YANG, Chenpeng, Shenzhen, Guangdong 518129 (CN); TANG, Zhao, Shenzhen, Guangdong 518129 (CN)
(74) Representative: Pfenning, Meinig & Partner mbB
(86) International application number: PCT/CN2023/100542
(87) International publication number: WO 2024/001816

(57) **Abstract**

Embodiments of this application provide a message processing method and an electronic device. In the method, a server parses a message log to obtain data of a first communication ID, where the first communication ID is associated with a first device ID and a first account ID; detects, based on the data of the first communication ID, whether the first communication ID is a suspected harassment communication ID; in response to that the first communication ID is the suspected harassment communication ID, obtains a second communication ID, where the second communication ID includes a communication ID associated with the first device ID and a communication ID associated with the first account ID; detects, based on data of the second communication ID, whether the second communication ID is the suspected harassment communication ID; and in response to that the second communication ID is the suspected harassment communication ID, bans the first device ID, the first account ID, and a second device ID and a second account ID that are associated with the second communication ID. In embodiments of this application, an account and a device associated with the account may be banned, so that a harassment message can be effectively intercepted.

## Description

This application claims priority to Chinese Patent Application No. 202210761580.0, filed with the China National Intellectual Property Administration on June 30, 2022 and entitled "MESSAGE PROCESSING METHOD AND ELECTRONIC DEVICE", which is incorporated herein by reference in its entirety.

### TECHNICAL FIELD

Embodiments of this application relate to the field of communication technologies, and in particular, to a message processing method and an electronic device.

### BACKGROUND

Users may contact each other by sending and receiving messages. For example, a user may send a message to a terminal of another user by using a social communication application on a terminal. There are a large quantity of users using social communication applications, and the users receive a large quantity of harassment messages on the social communication applications.

Currently, the user may upload a message screenshot to a server, and the server bans an account that sends a harassment message, to prevent the harassment account from sending a harassment message again. However, this approach is simple and has poor effect.

### SUMMARY

Embodiments of this application provide a message processing method and an electronic device, to ban an account and a device associated with the account, so as to more effectively intercept a harassment message.

According to a first aspect, an embodiment of this application provides a message processing method. The method may be performed by a server or a chip in a server. The following embodiments are described by using the server as an example. In an embodiment, the server may be a server corresponding to an application that receives and sends messages.

In the method, the server parses a message log to obtain data of a first communication ID, where the first communication ID is associated with a first device ID and a first account ID. It should be understood that the message log may record information about a message sender and a message receiver and information about a message. In an embodiment, the message log may include a device ID, an account ID, a communication ID of the message sender, a device ID, an account ID, and a communication ID of the message receiver, a message sending time, and a message type. The communication ID is obtained based on the device ID and the account ID, and the communication ID is associated with the device ID and the account ID. In embodiments of this application, the first communication ID is obtained based on the first device ID and the first account ID. In other words, the first communication ID is associated with the first device ID and the first account ID.

The server detects, based on the data of the first communication ID, whether the first communication ID is a suspected harassment communication ID; and in response to that the first communication ID is the suspected harassment communication ID, the server obtains a second communication ID, and detects, based on data of the second communication ID in the message log, whether the second communication ID is the suspected harassment communication ID. The second communication ID includes a communication ID associated with the first device ID, and a communication ID associated with the first account ID, and the second communication ID is different from the first communication ID.

In other words, when determining that the first communication ID is the suspected harassment communication ID, the server may further obtain the communication ID associated with the first device ID and the communication ID associated with the first account ID, and further detect whether the second communication ID is the suspected harassment communication ID. In response to that the second communication ID is the suspected harassment communication ID, the server bans the first device ID, the first account ID, and a second device ID and a second account ID that are associated with the second communication ID.

In an embodiment, the second device ID and the second account ID are a device ID and an account ID that are directly associated with the second communication ID. Direct association may be understood as follows: The second communication ID is generated by the second device ID and the second account ID.

In an embodiment, the second device ID and the second account ID are a device ID and an account ID that are directly and indirectly associated with the second communication ID. For direct association, refer to the related description above.

Indirect association may be understood as follows: The second device ID is a device ID directly or indirectly associated with a device ID (or an account ID) that generates the second communication ID, and the second account ID is an account ID directly or indirectly associated with a device ID (or an account ID) that generates the second communication ID.

In an embodiment, indirect association may alternatively be understood as follows: The second communication ID is associated again or associated for a plurality of times based on an associated device ID or an associated account ID. In other words, in embodiments of this application, all associated accounts and devices can be found and banned to implement comprehensive banning.

In embodiments of this application, the server may parse the message log, and detect, with reference to data of the message sender, whether the communication ID is the suspected harassment communication ID. There is massive data in the message log, detection accuracy is high, and the server does not analyze specific content of the message. Therefore, user privacy can be protected. In addition, the server analyzes not only one communication ID, but also whether another communication ID associated with an account and a device corresponding to the communication ID is the suspected harassment communication ID. To be specific, in scenarios in which a plurality of accounts are logged in on one device, one account is logged in on a plurality of devices, and one mobile phone number is bound to a plurality of accounts, the server can perform association and comprehensive analysis, to implement comprehensive banning. This avoids a problem that another account is logged in on a same device or a new account is applied for by using a mobile phone number to continue to send a harassment message after an account is banned.

The following describes a process of detecting whether the first communication ID is the suspected harassment communication ID.

In a possible implementation, the server stores a feature library, and the feature library stores a feature of the suspected harassment communication ID. It is detected, based on the data of the first communication ID and the feature of the suspected harassment communication ID, whether the first communication ID is the suspected harassment communication ID. If the data of the first communication ID satisfies the feature of the suspected harassment communication ID, the server may determine that the first communication ID is the suspected harassment communication ID. If the data of the first communication ID does not satisfy the feature of the suspected harassment communication ID, the server may determine that the first communication ID is not the suspected harassment communication ID.

The feature of the suspected harassment communication ID includes at least one of the following: A quantity of messages sent by the first communication ID within preset duration is greater than a first quantity threshold, a proportion of a quantity of messages sent by the first communication ID to the message receiver is greater than a preset proportion, a message sending time period is in a concentrated time period, and a message sending frequency is fixed (or is within a preset frequency range).

The server may detect whether the quantity of messages sent by the first communication ID within the preset duration is greater than or equal to the first quantity threshold; in response to that the quantity of messages sent by the first communication ID within the preset duration is greater than or equal to the first quantity threshold, the server may detect whether the proportion of the quantity of messages sent by the first communication ID to the message receiver is greater than or equal to the preset proportion; and in response to that the proportion of the quantity of messages sent by the first communication ID to the message receiver is greater than or equal to the preset proportion, the server may detect whether a message sending time period of the first communication ID is in the concentrated time period, and/or whether a message sending frequency of the first communication ID is a fixed frequency. For example, the server detects whether the message sending time period of the first communication ID is in the concentrated time period. If the message sending time period of the first communication ID is in the concentrated time period, the server may determine that the first communication ID is the suspected harassment communication ID.

In this implementation, for a process in which the server detects whether the second communication ID is the suspected harassment communication ID, refer to the description of "the process of detecting whether the first communication ID is the suspected harassment communication ID".

In a possible implementation, the feature of the suspected harassment communication ID may include: A quantity of operations of adding or deleting a contact by the first communication ID within preset duration is greater than a second quantity threshold, a quantity of added or deleted contacts within the preset duration is greater than a third quantity threshold, a message sending time period of the first communication ID is in a concentrated time period, and a message sending frequency is fixed (or within a preset frequency range).

In this possible implementation, the server may detect whether the quantity of operations of adding or deleting the contact by the first communication ID within the preset duration is greater than the second quantity threshold, and whether the quantity of added or deleted contacts within the preset duration is greater than the third quantity threshold. In response to that the quantity of operations of adding or deleting the contact by the first communication ID within the preset duration is greater than the second quantity threshold, and the quantity of added or deleted contacts within the preset duration is greater than the third quantity threshold, the server may detect whether the message sending time period of the first communication ID is in the concentrated time period, and/or whether the message sending frequency is a fixed frequency. For example, the server detects whether the message sending time period of the first communication ID is in the concentrated time period. If the message sending time period of the first communication ID is in the concentrated time period, the server determines that the first communication ID is the suspected harassment communication ID.

In this implementation, for a process in which the server detects whether the second communication ID is the suspected harassment communication ID, refer to the description of "the process of detecting whether the first communication ID is the suspected harassment communication ID".

Based on the two implementations above, when detecting that the message sending time period of the first communication ID is in the concentrated time period, and/or that the message sending frequency is the fixed frequency, the server may further detect whether the first communication ID sends messages in a same concentrated time period in a plurality of consecutive days, detect whether the same concentrated time period is a preset time period, detect whether the first communication ID sends no message except for the preset time period, and detect whether a proportion of a quantity of messages sent by the first communication ID to the message receiver being 1 is 100%.

If the first communication ID sends the messages in the same concentrated time period in the plurality of consecutive days, the same concentrated time period is the preset time period, the first communication ID sends no message except for the preset time period, and the proportion of the quantity of messages sent by the first communication ID to the message receiver being 1 is 100%, the server determines that the first communication ID is the suspected harassment communication ID.

In this implementation, for a process in which the server detects whether the second communication ID is the suspected harassment communication ID, refer to the description of "the process of detecting whether the first communication ID is the suspected harassment communication ID".

It should be understood that a message sending feature specified in embodiments of this application is a message sending feature of a harassment ID, and detecting whether the data of the first communication ID is the same as the feature of the suspected harassment communication ID may help accurately detect whether the first communication ID is the suspected harassment communication ID. In an embodiment, more preset message sending features of the harassment ID indicate more accuracy of detection results.

The server detects whether data of the communication ID satisfies the feature of the suspected harassment communication ID. When the data of the communication ID satisfies the feature of the suspected harassment communication ID, a next feature is determined. When the data of the communication ID does not satisfy the feature of the suspected harassment communication ID, it is determined that the communication ID is not the suspected harassment communication ID. A one-size-fits-all approach (namely, an approach of yes and no) is adopted, and this approach is prone to misjudgment.

To improve accuracy of detecting whether the communication ID is the suspected harassment communication ID, and avoid a trouble caused by mis-banning, in a possible implementation, the server may increase a confidence of the communication ID being the suspected harassment communication ID once each time the server detects whether the communication ID satisfies the feature of the suspected harassment communication ID.

In this implementation, in response to that the quantity of messages sent by the first communication ID within the preset duration is greater than or equal to the first quantity threshold, the server increases a confidence of the first communication ID being the suspected harassment communication ID by a first preset confidence. In response to that the proportion of the quantity of messages sent by the first communication ID to the message receiver is greater than or equal to the preset proportion, the server increases the confidence of the first communication ID being the suspected harassment communication ID by a second preset confidence. In response to that the message sending time period of the first communication ID is in the concentrated time period, and/or the message sending frequency is the fixed frequency, the server increases the confidence of the first communication ID being the suspected harassment communication ID by a third preset confidence.

In response to each time the first communication ID satisfies any one of the following features, the server increases the confidence of the first communication ID being the suspected harassment communication ID by a fourth preset confidence: The first communication ID sends the messages in the same concentrated time period in the plurality of consecutive days, the same concentrated time period is the preset time period, the first communication ID sends no message except for the preset time period, and the proportion of the quantity of messages sent by the first communication ID to the message receiver being 1 is 100%.

Based on this, the server may obtain a first confidence of the first communication ID, and further detect, based on the first confidence, whether the first communication ID is the suspected harassment communication ID.

In this implementation, for a process in which the server detects whether the second communication ID is the suspected harassment communication ID, refer to the description of "the process of detecting whether the first communication ID is the suspected harassment communication ID". The server may obtain, based on the data of the second communication ID in the message log, a confidence of the second communication ID being the suspected harassment communication ID.

If the confidence of the second communication ID being the suspected harassment communication ID is greater than or equal to a first confidence threshold, the server may increase the first confidence by a fifth preset confidence to obtain a second confidence of the first communication ID, and further detect, based on the second confidence, whether the first communication ID is the suspected harassment communication ID. For example, when a confidence of the first communication ID is greater than or equal to a second confidence threshold, it may be determined that the first communication ID is the suspected harassment communication ID; or when a confidence of the first communication ID is less than a second confidence threshold, it may be determined that the first communication ID is not the suspected harassment communication ID.

In a possible implementation, the server may further add a suspected harassment list, to detect whether the first communication ID is included in the suspected harassment list, and detect whether the first communication ID is the suspected harassment communication ID, thereby further improving detection accuracy.

In this implementation, the server may aggregate a communication ID for which a quantity of operations of adding or deleting a contact within the preset duration is greater than or equal to the second quantity threshold and for which a quantity of added or deleted contacts within the preset duration is greater than the third quantity threshold, to obtain a first suspected harassment list, and aggregate a communication ID for which a mobile phone number associated with an account ID is a virtual number, to obtain a second suspected harassment list.

The server detects whether the first communication ID is included in the first suspected harassment list, the second suspected harassment list, and a third suspected harassment list. A second confidence of each communication ID in the third suspected harassment list is less than the second confidence threshold. The server may obtain, based on a result of whether the first communication ID is included in the first suspected harassment list, the second suspected harassment list, and the third suspected harassment list, a third confidence of the first communication ID being the suspected harassment communication ID. For example, each time the first communication ID is included in a suspected harassment list, the server may add a sixth preset confidence based on the second confidence of the first communication ID, to obtain a third confidence of whether the first communication ID is the suspected harassment communication ID.

The server may detect, based on the third confidence, whether the first communication ID is the suspected harassment communication ID. For example, in response to that the third confidence is greater than or equal to the second confidence threshold, the server determines that the first communication ID is the suspected harassment communication ID; or in response to that the third confidence is less than the second confidence threshold, the server determines that the first communication ID is not the suspected harassment communication ID.

In a possible implementation, because there is a huge data volume in the message log, the server may aggregate data, for example, aggregate the quantity of messages sent by the communication ID within the preset duration, the proportion of the quantity of messages sent to the message receiver, the message sending time period, and the message sending frequency. Based on an aggregation result, the server executes the process of detecting a suspected harassment communication ID in the foregoing possible implementations. In embodiments of this application, all messages sent by the first communication ID are user messages, and the first account ID is a non-official account.

In other words, in embodiments of this application, for a user message sent by a non-official account, the message processing method provided in embodiments of this application is performed. There is a low probability that official accounts and system messages send harassment messages. Therefore, detecting user messages sent by non-official accounts can reduce an amount of data processed by the server.

In a possible implementation, an embodiment of this application further provides a foreground interface for a user (an administrator) to perform an operation, thereby improving user experience.

In this implementation, when determining that both the first communication ID and the second communication ID are suspected harassment communication IDs, the server may output an association relationship among the first device ID, the first account ID, the second device ID, and the second account ID. For example, the server may display the association relationship among the first device ID, the first account ID, the second device ID, and the second account ID, or the server may send the association relationship among the first device ID, the first account ID, the second device ID, and the second account ID to a display device (for example, which bears a banning processing platform), so that the display device displays the association relationship among the first device ID, the first account ID, the second device ID, and the second account ID.

In response to an operation (performed by the administrator) on a target object in the association relationship, the server bans the target object. The target object is included in the first device ID, the first account ID, the second device ID, and the second account ID.

In a possible scenario, a first mobile phone number associated with the first account ID is associated with a plurality of accounts (including the first account ID and another account). In this scenario, when displaying the first device ID, the first account ID, the second device ID, and the second account ID, the server further displays the first mobile phone number associated with the first account ID.

In an embodiment, the administrator may further perform operations such as a banning operation, an unbanning operation, a marking operation, an adding operation to the suspected harassment list, a query operation, and an operation of updating the feature library on an interface of the banning processing platform.

According to a second aspect, an embodiment of this application provides an electronic device. The electronic device may include a processor and a memory. The memory is configured to store computer-executable program code, and the program code includes instructions. When the processor executes the instructions, the instructions enable the electronic device to perform the method according to the first aspect.

According to a third aspect, an embodiment of this application provides a computer program product including instructions. When the computer program product is run on a computer, the computer is enabled to perform the method according to the first aspect.

According to a fourth aspect, an embodiment of this application provides a computer-readable storage medium, and the computer-readable storage medium stores instructions. When the instructions are run on a computer, the computer is enabled to perform the method according to the first aspect.

For beneficial effects of possible implementations of the second aspect to the fourth aspect, refer to the beneficial effects brought by the first aspect. Details are not described herein again.

### BRIEF DESCRIPTION OF DRAWINGS

FIG. 1 is a diagram of a system architecture to which this application is applicable;
FIG. 2 is a schematic flowchart of an embodiment of a message processing method according to an embodiment of this application;
FIG. 3A to FIG. 3C are a schematic flowchart of another embodiment of a message processing method according to an embodiment of this application;
FIG. 4A is a diagram of an association relationship between a device and an account according to an embodiment of this application;
FIG. 4B is a diagram of an association relationship among a device, an account, and a mobile phone number according to an embodiment of this application;
FIG. 5A to FIG. 5C are a schematic flowchart of another embodiment of a message processing method according to an embodiment of this application;
FIG. 6A to FIG. 6E are a schematic flowchart of another embodiment of a message processing method according to an embodiment of this application;
FIG. 7A to FIG. 7F are a schematic flowchart of another embodiment of a message processing method according to an embodiment of this application;
FIG. 8a and FIG. 8b are a diagram of an interface of a banning processing platform according to an embodiment of this application; and
FIG. 9 is a diagram of a structure of an electronic device according to an embodiment of this application.

### DESCRIPTION OF EMBODIMENTS

A terminal (terminal) in embodiments of this application may be referred to as user equipment (user equipment, UE). For example, the terminal may be a mobile phone, a tablet computer (portable android device, PAD), a personal digital assistant (personal digital assistant, PDA), a handheld device with a wireless communication function, a computing device with a wireless communication function, a vehicle-mounted device with a wireless communication function, or a wearable device with a wireless communication function, a virtual reality (virtual reality, VR) terminal device, an augmented reality (augmented reality, AR) terminal device, a wireless terminal in industrial control (industrial control), a wireless terminal in smart home (smart home), or the like, A form of the terminal is not specifically limited in embodiments of this application.

The terminal may include at least one social communication application, and a user may send a message to (a terminal of) another user by using the social communication application on the terminal. For example, the social communication application may include but is not limited to an SMS application, a WeChat application, or the like. The social communication application is not limited in embodiments of this application. It should be understood that a short message service message received and sent in the SMS application may be referred to as an SMS message, and a message received and sent in the WeChat application may be referred to as a WeChat message. In the following embodiments, the "message" is used to represent a message received and sent in each application.

For a problem that a user receives a harassment message, the user may adopt an approach of "turning off a message from an unknown account" to avoid receiving the harassment message. However, this approach is one-size-fits-all, and the user cannot receive a normal message from a stranger even when the user does not receive the harassment message. Currently, content of a message received by the terminal may be further analyzed, so that a harassment message is intercepted when it is determined that the message is the harassment message. In this approach, specific content of the message needs to be analyzed, and privacy is poor.

In addition, the user may upload a screenshot of the harassment message to a server (for example, a social communication application server) on the social communication application, and the server may ban an account that sends the harassment message, to avoid the account from sending the harassment message again. For the SMS application, an account that sends a harassment message may be understood as a mobile phone number. For another social communication application, an account that sends a harassment message may be understood as an application account. For example, in a WeChat application, an account that sends a harassment message may be a WeChat account, and/or an account that sends a harassment message may be a mobile phone number associated with the WeChat account. In an embodiment, the application account may be referred to as an identity document (identity document, ID) of the account.

In an embodiment, that an account is banned may be understood as that the account cannot be used. For example, the social communication application cannot log in to the account, or the social communication application cannot send a message after logging in to the account. A status of the account after the account is banned is not described in embodiments of this application.

Currently, an approach of banning an account is simple. For example, a malicious user (a user who sends a harassment message) may apply for a new account (or change an account), and use the new account (or another account) to continue to send a harassment message. This approach of banning the account has poor effect, and the user still receives a large quantity of harassment messages.

For the foregoing problem, embodiments of this application are intended to: not analyze specific content of the message; and on the premise that user privacy is protected, in scenarios in which a plurality of accounts are logged in on one terminal, one account is logged in on a plurality of terminals, and one mobile phone number is associated with a plurality of application accounts, recognize an account that sends the harassment message and a device and a mobile phone number that are associated with the account. In this way, not only the account is banned, but also the device and the mobile phone number that are associated with the account are banned, thereby thoroughly intercepting the harassment message.

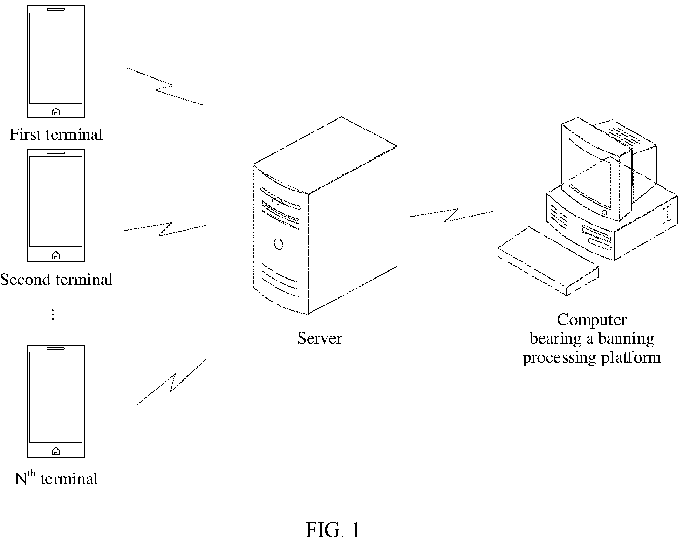

Before the message processing method provided in embodiments of this application is described, a system architecture to which this application is applicable is first described. FIG. 1 is a diagram of the system architecture to which this application is applicable. With reference to FIG. 1, the system architecture may include at least one terminal and a server. The at least one terminal may include a terminal 1, a terminal 2, ..., and a terminal N, where N is an integer greater than or equal to 2. In an embodiment, the terminal 1 may be referred to as a first terminal, the terminal 2 may be referred to as a second terminal, and the terminal N may be referred to as an N^{th} terminal.

The terminals may send and receive messages by using the server. For example, the message is an SMS message, and the server may be an SMS server; or the message is a WeChat message, and the server may be a WeChat server. For example, if the terminal 1 sends an SMS message to the terminal 2, a transmission process of the SMS message is the terminal 1 - the SMS server - the terminal 2 in sequence.

The server may store a message log (which may be referred to as a log for short) between the terminals. The message log may record a message exchange process between the terminals.

In an embodiment, the system structure may include a database, the message log may be stored in the database, and the server may access the database to obtain the message log between the terminals.

In an embodiment, the server may include a log parsing module, a data aggregation module, and a harassment recognition and interception module.

The log parsing module is configured to parse the message log. In an embodiment, the log parsing module may perform S201 in the following embodiment.

The data aggregation module is configured to aggregate parsed message logs. For example, data is sorted in descending order based on quantities of sent messages. In an embodiment, the data aggregation module may perform aggregation operations in aggregation processing steps 1 to 10 in the following embodiment.

The harassment recognition and interception module is configured to recognize a harassment account, device, and mobile phone number based on a feature of a suspected harassment communication ID in a feature library, to perform banning. In an embodiment, the harassment recognition and interception module may perform S202 to S205 in the following embodiment.

In an embodiment, the system architecture may further include a banning processing platform. The banning processing platform may be integrated with the server or disposed alone.

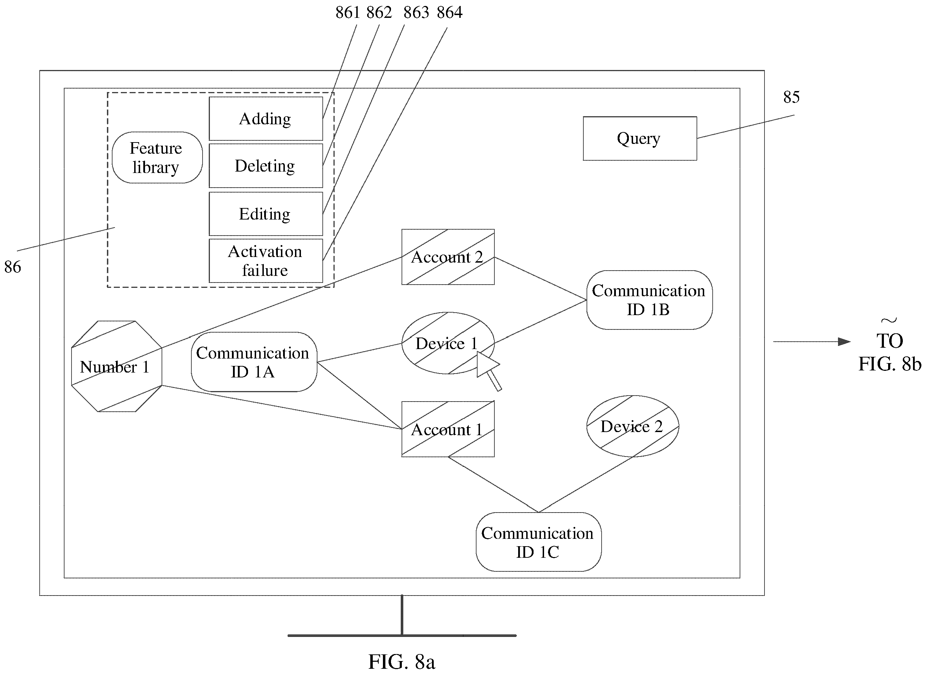

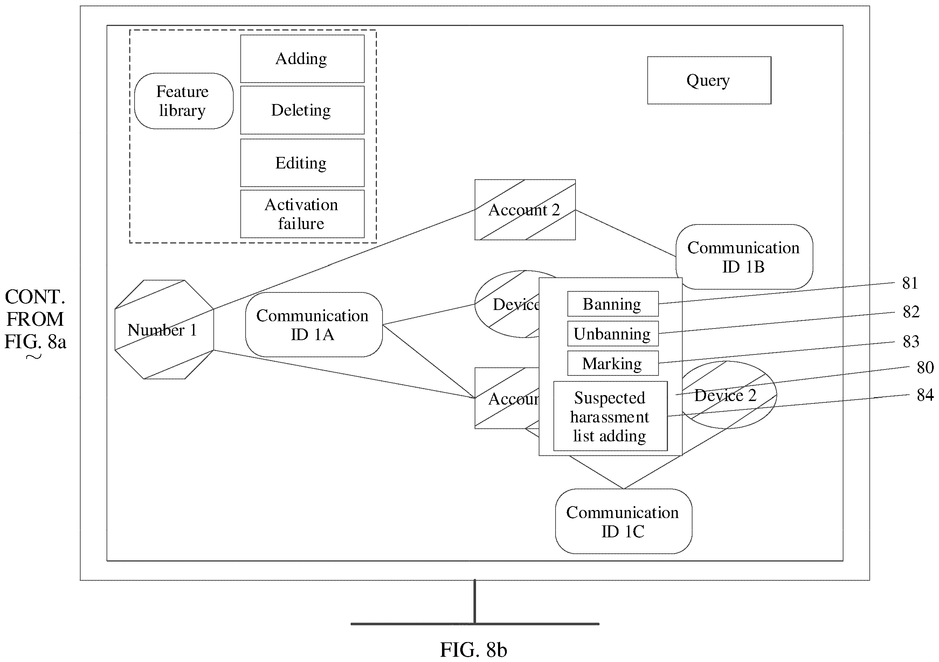

An administrator can enter an account and a password to log in to the banning processing platform on any device. The banning processing platform may display statuses (such as a banning status and a suspected status) of an account, a device, and a mobile phone number. The administrator may perform operations such as a banning operation, an unbanning operation, a query operation, and an operation of updating a feature library on the banning processing platform. For an interface of the banning processing platform and a function that can be implemented, refer to the related description in FIG. 8a and FIG. 8b.

It should be understood that, in FIG. 1, an example in which the administrator logs in to the banning processing platform on a computer is used for description, that is, a device bearing the banning processing platform for log-in is the computer.

In an embodiment, the banning processing platform may include a display module and a harassment information read/write module.

The harassment information read/write module is configured to: read the statuses of the account, the device, and the mobile phone number from the server; write the statuses of the account, the device, and the mobile phone number into the banning processing platform; and in response to an operation performed by the user on the interface of the banning processing platform, synchronize a status change that is of the account, the device, the mobile phone number, or the like and that is triggered by the operation of the user, a change of a feature in the feature library, or the like to the server.

The display module is configured to display the interface of the banning processing platform based on the operation of the user.

It may be understood that the structure shown in FIG. 1 does not constitute a specific limitation on the system architecture. In some other embodiments of this application, the system architecture may include more or fewer components than those shown in the figure, combine some components, split some components, or have a different component arrangement. The components shown in the figure may be implemented by hardware, software, or a combination of software and hardware.

The following describes the message processing method provided in embodiments of this application with reference to specific embodiments. The following several embodiments may be combined with each other, and a same or similar concept or process may not be described repeatedly in some embodiments.

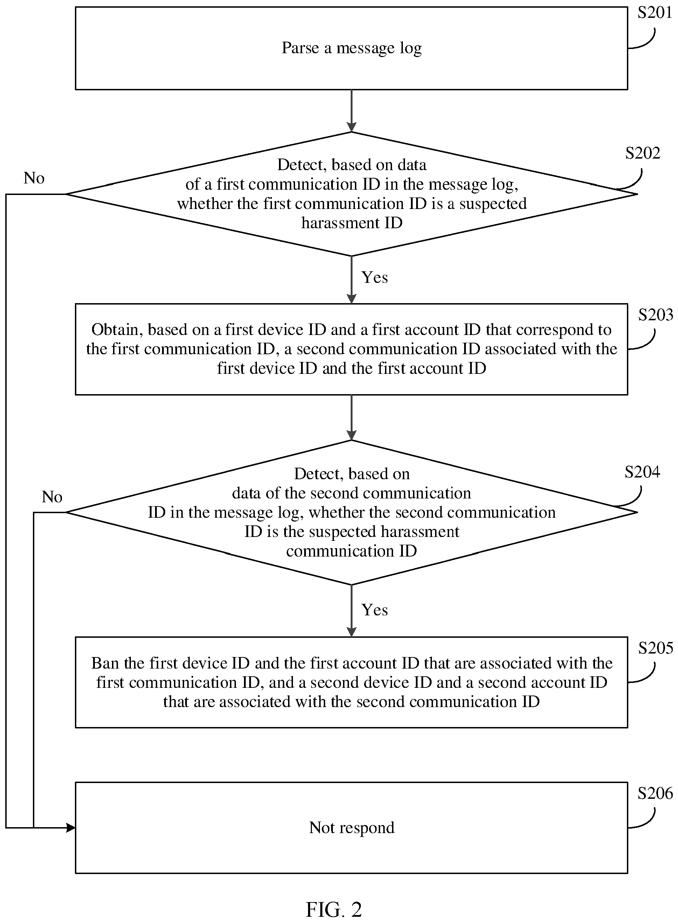

FIG. 2 is a schematic flowchart of an embodiment of a message processing method according to an embodiment of this application. With reference to FIG. 2, the message processing method provided in this embodiment of this application may include the following steps.

S201: A server parses a message log.

The message log may record a message exchange process between terminals.

The server parses the message log to obtain a device ID, an account ID, and a communication ID of a message sender (a device that sends a message), a device ID, an account ID, and a communication ID of a message receiver (a device that receives the message), a message sending time, and a message type.

The device ID may include but is not limited to an international mobile equipment identity (international mobile equipment identity, IMEI) of the device and another information that uniquely indicates the device. For the account ID, refer to the related description in the foregoing embodiments.

The communication ID may be obtained based on the device ID and the account ID. For example, several specific digits in the device ID and several specific digits in the account ID may be spliced to obtain the communication ID. Alternatively, a Hash (Hash) algorithm may be used to obtain (generate) the communication ID based on the device ID and the account ID. It should be noted that obtained communication IDs are different when device IDs or account IDs are different. In other words, the communication ID may uniquely correspond to one device ID and one account ID.

The message sending time indicates a time when the message sender sends a message.

The message type may include but is not limited to a text, a picture, a voice, or the like. In an embodiment, the message type may further include but is not limited to a system message and a user message.

In an embodiment, the message sender may obtain the communication ID based on the device ID and the account ID, and carry the device ID, the account ID, and the communication ID of the message sender, the message sending time, and the message type when sending the message. In an embodiment, the message sender carries the device ID and the account ID of the message sender, the message sending time, and the message type when sending the message; and the server obtains the communication ID of the message sender based on the device ID and the account ID of the message sender.

In other words, the server parses the log to obtain related information about at least one message. The related information about the message may include the device ID, the account ID, and the communication ID of the message sender, the device ID, the account ID, and the communication ID of the message receiver, the message sending time, and the message type.

In an embodiment, the message log may further include content of messages exchanged between the terminals. In an embodiment, the message log may further include operations of adding or deleting a contact by the message sender and the message receiver.

In an embodiment, the server may parse the message log periodically, or parse the log at a fixed moment every day.

S202: The server detects, based on data of a first communication ID in the message log, whether the first communication ID is a suspected harassment communication ID, where if the first communication ID is the suspected harassment communication ID, S203 is performed; or if the first communication ID is not the suspected harassment communication ID, S206 is performed.

The message log may include a record of a plurality of communication IDs. Herein, the first communication ID is used as an example to describe a process in which the server detects whether the communication ID is the suspected harassment communication ID. The first communication ID is included in the plurality of communication IDs in the message log, or the first communication ID represents each communication ID in the message log.

In an embodiment, the data of the first communication ID in the message log may include at least one of the following: a total quantity of messages sent by the first communication ID as the message sender in the message log, a quantity of messages sent within preset duration, a quantity of message receivers of the first communication ID, a quantity of messages received by the message receiver of the first communication ID, distribution of a message sending time period of the first communication ID, a message sending frequency, and the like.

A quantity of messages sent by the first communication ID as the message sender within the preset duration is used as an example. The server may collect statistics, based on the message log, on a quantity (for example, 500) of messages sent by the first communication ID as the message sender within the preset duration (for example, 3 minutes). If the quantity of messages sent within the preset duration is greater than or equal to a first threshold (for example, 300), it is determined that the first communication ID is the suspected harassment communication ID. If the quantity of messages sent within the preset duration is less than the first threshold, it is determined that the first communication ID is not the suspected harassment communication ID.

In an embodiment, due to a large quantity of messages in the message log, after parsing the message log, the server may first perform aggregation processing on the message log, helping determine whether the communication ID satisfies a feature of the suspected harassment communication ID. If the communication ID satisfies the feature of the suspected harassment communication ID, it may be determined that the communication ID is the suspected harassment communication ID. If the communication ID does not satisfy the feature of the suspected harassment communication ID, it may be determined that the communication ID is not the suspected harassment communication ID. In an embodiment, the server may store a feature library, and the feature library stores the feature of the suspected harassment communication ID. In this embodiment, the server may detect, based on the data of the first communication ID in the message log, whether the first communication ID satisfies the feature of the suspected harassment communication ID, to detect whether the first communication ID is the suspected harassment communication ID.

Aggregation processing of the server may include the following:
1. Message types are aggregated. For example, system messages and user messages may be aggregated in the message log.
   The system message is a message sent by a system of a terminal, and the user message is a message sent and received for interaction between users. In an embodiment, when sending a message, the message sender carries an identifier used to identify whether the message is a system message or a user message. After parsing the log, the server may aggregate system messages and user messages based on the identifier. In embodiments of this application, the message processing method in this application is performed for the user message.
2. In the user messages, message senders that are non-official accounts are aggregated.
   In the aggregated user messages, the server may aggregate the message senders that are non-official accounts. For example, an official account may be an account of a social communication application. In an embodiment, the server may store a whitelist, and the whitelist includes at least one official account.
   In the user messages obtained through aggregation by the server, the server may query the whitelist and aggregate messages of the non-official accounts.
3. In messages sent by non-official accounts, a quantity of messages sent by a communication ID is aggregated.
   In messages sent by the message sender who is a non-official account, the server may collect statistics on a quantity of messages sent by the communication ID as the message sender. For example, the server may collect statistics on a quantity of messages sent by a communication ID 1 as the message sender, a quantity of messages sent by a communication ID 2 as the message sender, a quantity of messages sent by a communication ID 3 as the message sender, and the like.
   In an embodiment, the server may collect statistics on a quantity of messages sent by a same communication ID within the preset duration. For example, the preset duration may be the last day or last three days, and the server may collect statistics on a quantity of messages sent by the communication ID in the last day or the last three days. The last day is used as an example. The server may collect statistics on a quantity of messages sent by the communication ID 1 in the last day, a quantity of messages sent by the communication ID 2 in the last day, a quantity of messages sent by the communication ID 3 in the last day, and the like.
4. A quantity of messages sent by the communication ID to the message receiver is aggregated.

In an embodiment, after the server aggregates the quantity of messages sent by the communication ID, for communication IDs for which "a quantity of messages sent by the communication IDs within preset duration is greater than a second threshold", the server may aggregate a quantity of messages sent by the communication IDs to each message receiver. For example, in the communication ID 1, the communication ID 2, and the communication ID 3, if the quantity of messages sent by communication ID 1 in the last day is greater than the second threshold (for example, 1000), the server may aggregate a quantity of messages sent by communication ID 1 to each message receiver in the last day. In an embodiment, the second threshold may be referred to as a first quantity threshold. It should be understood that, in the accompanying drawings, the "second threshold" represents a "second quantity threshold".

Alternatively, in an embodiment, the server may aggregate a proportion of the quantity of messages sent by the communication ID to the message receiver. For example, in the communication ID 1, the communication ID 2, and the communication ID 3, if the quantity of messages sent by the communication ID 1 in the last day is greater than the second threshold (for example, 1000), the server may aggregate a proportion of a quantity of messages sent by the communication ID 1 to each message receiver in the last day.

For example, in one day, the server may aggregate a quantity of messages sent by the communication ID 1 to a communication ID 4 being 1, a quantity of messages sent to a communication ID 5 being 1, a quantity of messages sent to a communication ID 6 being 1, and a quantity of messages sent to a communication ID 7 being 2. The server may collect statistics on a proportion of a quantity of messages sent by the communication ID 1 to the message receivers being 1 is 3/4, and a proportion of a quantity of messages sent to the message receiver being 1 is 1/4.

5. Message sending time periods and message sending frequencies of the communication ID are aggregated.

In an embodiment, when the server may aggregate communication IDs for which quantities of messages sent to the message receiver are all less than a third threshold, message sending time periods and message sending frequencies of these communication IDs are further aggregated. For example, the third threshold may be 2. If quantities of messages sent by the communication ID to each message receiver are all 1 (all less than 2), the server may aggregate message sending time periods and message sending frequencies of the communication ID. For example, the message sending time period that is of the communication ID and that is aggregated by the server is 4:00 p.m. to 5:00 p.m. and 1:00 a.m. to 2:00 a.m. on a day, and the message sending frequency that is of the communication ID and that is aggregated by the server is 10 messages per minute.

In an embodiment, after the server aggregates the proportion of the quantity of messages sent by the communication ID to the message receiver, if it is determined that a proportion of a quantity of messages sent by the communication ID to the message receiver being 1 is greater than or equal to a preset proportion, the server aggregates the message sending time periods and the message sending frequencies of these communication IDs.

6. A quantity of operations of adding or deleting a contact, and a quantity of added or deleted contacts are aggregated.

For example, in the message log, the server may aggregate a quantity of operations of adding or deleting a contact by the communication ID as the message sender, and a total quantity of added or deleted contacts. For example, the server may sort communication IDs as the message sender in a descending order of the quantity of operations of adding or deleting the contact. In an embodiment, the server may aggregate communication IDs as a message sender, a quantity of operations of adding or deleting a contact within preset duration (for example, in one day), and a quantity of added or deleted contacts.

For example, in the message log, for the communication ID 1 as the message sender, in one day, a quantity of operations of adding or deleting a contact is 50, and a quantity of added or deleted contacts is 500. For the communication ID 2 as the message sender, in one day, a quantity of operations of adding or deleting a contact is 30, and a quantity of added or deleted contacts is 500. In addition, for the communication ID 3 as the message sender, in one day, a quantity of operations of adding or deleting a contact is 100, and a quantity of added or deleted contacts is 500.

In an embodiment, adding a contact once may be considered as an operation of adding or deleting the contact, and deleting a contact once may be considered as an operation of adding or deleting the contact. There is an upper limit on a quantity of contacts that can be added or deleted each time, that is, a maximum of 100 contacts (for example) can be added or deleted each time. Therefore, if the quantity of contacts exceeds the upper limit, a batch operation needs to be performed, that is, the contacts need to be added or deleted for a plurality of times.

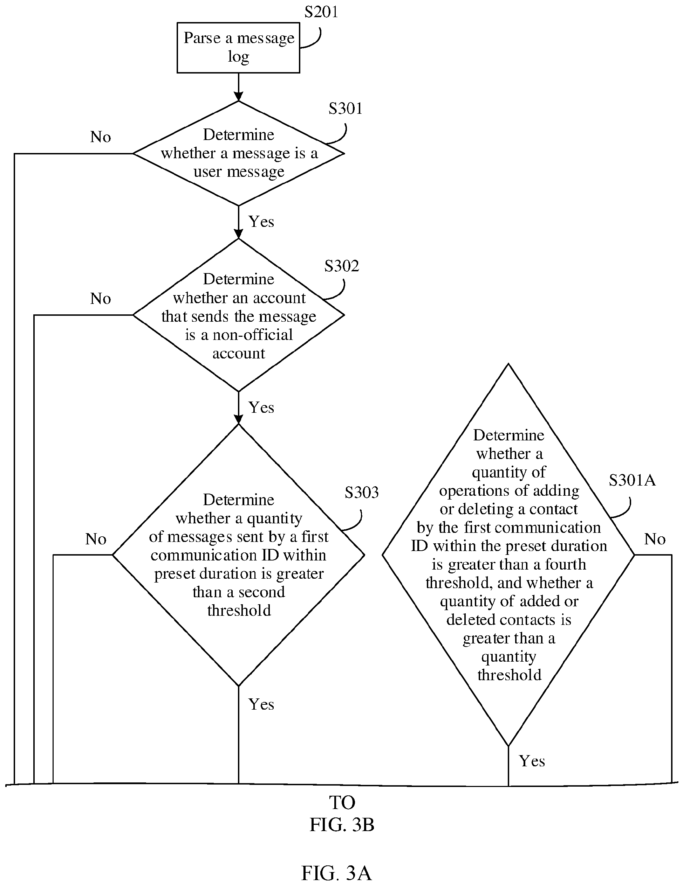

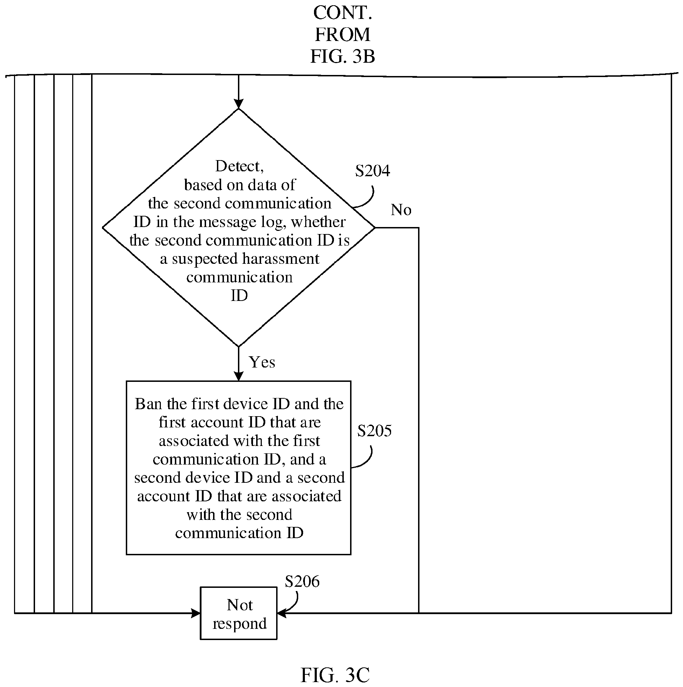

In an embodiment, with reference to FIG. 3A to FIG. 3C, the data that is of the first communication ID and that is aggregated by the server may include: the message type, an account type, a quantity of messages sent to the message receiver within the preset duration, a proportion of a quantity of messages sent to the message receiver being 1, a message sending time period, a message sending frequency, a quantity of operations of adding or deleting a contact, and a quantity of added or deleted contacts.

With reference to FIG. 3A to FIG. 3C, a process in which the server detects whether the first communication ID is the suspected harassment communication ID is described. For S301 to S305 and S301A, refer to the description of aggregation processing in 1 to 6 above.

S301: Determine whether the message is a user message, where if the message is the user message, S302 is performed; or if the message is not the user message, S206 is performed.

S302: Determine whether an account that sends the message is a non-official account, where if the account that sends the message is the non-official account, S303 is performed; or if the account that sends the message is not the non-official account, S206 is performed.

S303: Determine whether a quantity of messages sent by the first communication ID within the preset duration is greater than the second threshold, where if the quantity of messages sent by the first communication ID within the preset duration is greater than the second threshold, S304 is performed; or if the quantity of messages sent by the first communication ID within the preset duration is not greater than the second threshold, S206 is performed.

S304: Determine whether a proportion of a quantity of messages sent by the first communication ID to the message receiver being 1 is greater than the preset proportion, where if the proportion of the quantity of messages sent by the first communication ID to the message receiver being 1 is greater than the preset proportion, S305 is performed; or if the proportion of the quantity of messages sent by the first communication ID to the message receiver being 1 is not greater than the preset proportion, S206 is performed.

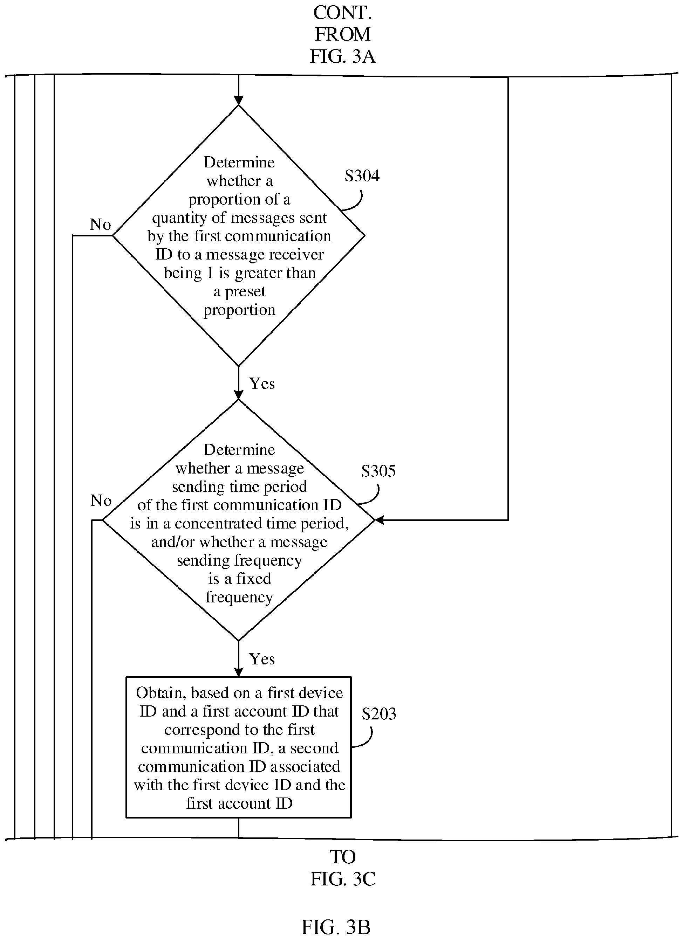

In an embodiment, S304 may be replaced with the following: determining whether a quantity of messages sent by the first communication ID to each message receiver is 1. If the quantity of messages sent by the first communication ID to each message receiver is 1, S305 is performed; or if the quantity of messages sent by the first communication ID to each message receiver is not 1, S206 is performed. It should be understood that FIG. 3B is described by using "determining whether a proportion of a quantity of messages sent by the first communication ID to the message receiver being 1 is greater than the preset proportion" as an example.

S305: Determine whether a message sending time period of the first communication ID is in a concentrated time period, and/or whether a message sending frequency is a fixed frequency, where if the message sending time period of the first communication ID is in the concentrated time period, and/or the message sending frequency is the fixed frequency, S203 is performed; or if the message sending time period of the first communication ID is not in the concentrated time period, and/or whether the message sending frequency is not the fixed frequency, S206 is performed.

The concentrated time period may be understood as preset duration. For example, the concentrated time period may be two hours. For example, if the message sending time period that is of the communication ID and that is aggregated by the server is 4:00 p.m. to 5:00 p.m. and 1:00 a.m. to 2:00 a.m. on a day, the server determines that the message sending time period of the communication ID is in the concentrated time period.

In an embodiment, the message sending frequency of the communication ID is the fixed frequency. To be specific, the message sending frequency of the communication ID is unchanged or a change of the frequency is within a preset frequency range. For example, the message sending frequency of the communication ID is 10 messages per minute, and the 10 messages per minute is a fixed message sending frequency of the communication ID.

In an embodiment, either or both of "whether a message sending time period of the communication ID is in a concentrated time period" and "a message sending frequency is a fixed frequency" may be used.

In an embodiment, with reference to FIG. 3A, S301A may be further performed.

S301A: Determine whether a quantity of operations of adding or deleting a contact by the first communication ID within the preset duration is greater than (or equal to) a fourth threshold, and whether a quantity of added or deleted contacts is greater than (or equal to) a third quantity threshold, where if the quantity of the operations of adding or deleting the contact by the first communication ID within the preset duration is greater than (or equal to) the fourth threshold, and the quantity of added or deleted contacts is greater than (or equal to) the third quantity threshold, S305 is performed; or if the quantity of the operations of adding or deleting the contact by the first communication ID within the preset duration is not greater than (or equal to) the fourth threshold, and the quantity of added or deleted contacts is not greater than (or equal to) the third quantity threshold, S206 is performed. In an embodiment, the fourth threshold may be referred to as the second quantity threshold. It should be understood that, in the accompanying drawings, the "fourth threshold" represents the "second quantity threshold", and the quantity threshold represents the "third quantity threshold".

It should be understood that a sequence of the determining steps shown in FIG. 3A to FIG. 3C may be adjusted. For example, S304 and S303 may be exchanged, or S303 may be adjusted to S301. The sequence of the determining steps in FIG. 3A to FIG. 3C is an example for description.

In an embodiment, it may be understood that S202 includes S301 to S305 and S301A.

S203: The server obtains, based on a first device ID and a first account ID that correspond to the first communication ID, a second communication ID associated with the first device ID and the first account ID.

In a first case, in a scenario in which a plurality of accounts (for example, an account 1 and an account 2) may be logged in on one device (for example, a device 1), a user may use the plurality of accounts on the device to send messages. The message log records that information about a message sender is the device 1, the account 1, and a communication ID 1A obtained by the device 1 and the account 1, and the message log also records that information about the message sender is the device 1, the account 2, and a communication ID 1B obtained by the device 1 and the account 2. If the message is an SMS message, both the account 1 and the account 2 may be mobile phone numbers. If the message is a WeChat message, both the account 1 and the account 2 may be WeChat accounts.

That a plurality of accounts may be logged in on one device may be considered that the device 1 is associated with the account 1 and the account 2, and the server may determine, based on records in the message log, that both the device 1 and the account 1 are associated with the communication ID 1A, and both the device 1 and the account 2 are associated with the communication ID 1B.

In a second case, in a scenario in which one account (for example, an account 1) is logged in on a plurality of devices (for example, a device 1 and a device 2), a user may use the account 1 on the device 1 and the account 1 on the device 2 to send messages. The message log records that information about a message sender is the device 1, the account 1, and a communication ID 1A obtained by the device 1 and the account 1, and the message log also records that information about the message sender is the device 2, the account 1, and a communication ID 1C obtained by the device 2 and the account 1.

That one account may be logged in on a plurality of devices may be considered that the account 1 is associated with the device 1 and the device 2, and the server may determine, based on records in the message log, that both the device 1 and the account 1 are associated with the communication ID 1A, and both the device 2 and the account 1 are associated with the communication ID 1C.

In a third case, in a scenario in which a mobile phone number (for example, a number 1) is bound to a plurality of application accounts (for example, an account 1 and an account 2), the number 1 may be associated with the account 1 and the account 2. In this scenario, although the message log does not record a binding relationship between a mobile phone number and an application account, in embodiments of this application, the server may store an operation log of the user. The operation log may include an operation of binding the application account and the mobile phone number by the user. Therefore, the server may query the operation log, determine that the mobile phone number (for example, the number 1) is bound to the plurality of application accounts (for example, the account 1 and the account 2), and further determine that the number 1 may be associated with the account 1 and the account 2.

In an embodiment, the server may construct a relational database based on the message log. The relational database includes an association relationship among a device ID, an account ID, and a communication ID. In an embodiment, in the relational database, the association relationship among the device ID, the account ID, and the communication ID may be represented in a form of a tree diagram, a topology diagram, or the like. This is not limited in embodiments of this application.

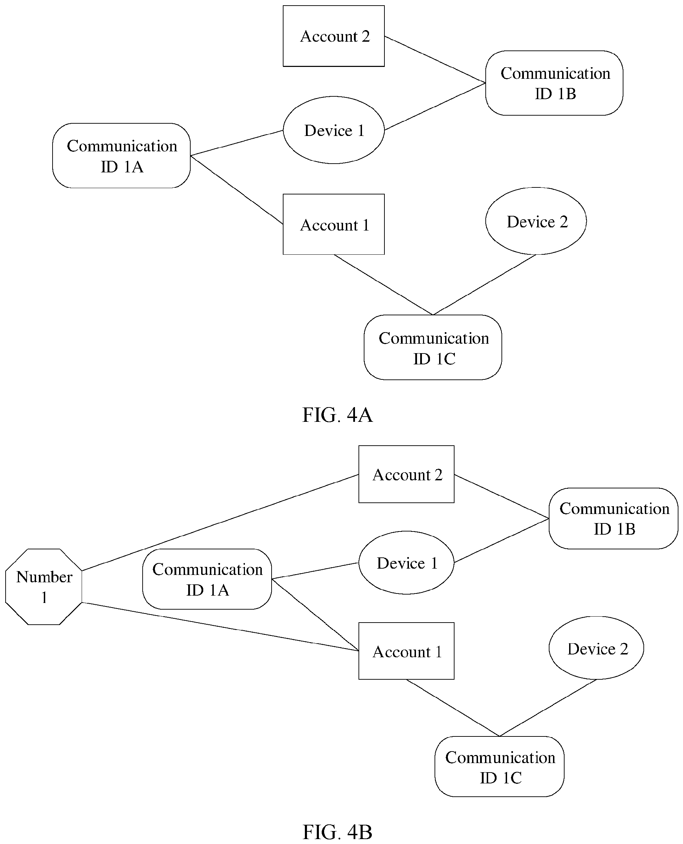

For example, in FIG. 4A, an association relationship among the account 1, the account 2, the device 1, the device 2, the communication ID 1A, the communication ID 1B, and the communication ID 1C is represented in a form of a topology diagram.

In an embodiment, the server may construct a relational database based on the message log and the operation log. The relational database includes an association relationship among a device ID, an account ID, a communication ID, and a mobile phone number. In an embodiment, the operation log may be considered as a message log. Therefore, the server may construct a relational database shown in FIG. 4B based on the message log.

For example, in FIG. 4B, an association relationship among the account 1, the account 2, the device 1, the device 2, the communication ID 1A, the communication ID 1B, the communication ID 1C, and the number 1 is represented in a form of a topology diagram.

In an embodiment, a device ID and an account ID that are associated with the first communication ID may be referred to as the first device ID and the first account ID. The first communication ID is obtained based on the first device ID and the first account ID. When determining that the first communication ID is the suspected harassment communication ID, the server may query the relational database to obtain a communication ID associated with the first device ID and a communication ID associated with the first account ID. In embodiments of this application, the communication ID associated with the first device ID and the communication ID associated with the first account ID are referred to as the second communication ID.

With reference to FIG. 4A, for example, the first communication ID is the communication ID 1A. Then, the first device ID is the device 1, the first account ID is the account 1, communication IDs associated with the device 1 are the communication ID 1A (namely, the first communication ID) and the communication ID 1B, communication IDs associated with the account 1 include the communication ID 1A and the communication ID 1C, and the ID 1A, the communication ID 1B, and the ID 1C may be used as second communication IDs.

In an embodiment, to reduce repeated calculation, the second communication ID is a communication ID other than the first communication ID in the communication IDs associated with the first device ID and the communication IDs associated with the first account ID. In this embodiment, with reference to FIG. 4A, for example, the first communication ID is the communication ID 1A. Then, the first device ID is the device 1, the first account ID is the account 1, second communication IDs associated with the device 1 are the communication ID 1A (namely, the first communication ID) and the communication ID 1B, communication IDs associated with the account 1 include the communication ID 1A and the communication ID 1C, and the communication ID 1B and the communication ID 1C may be used as second communication IDs.

In an embodiment, if a mobile phone number associated with the first account ID is bound to more than one account (namely, the first account ID), and is further bound to another account (for example, a third account ID), the server may further use a communication ID associated with the third account ID as the second communication ID.

S204: The server detects, based on data of the second communication ID in the message log, whether the second communication ID is the suspected harassment communication ID, where if the second communication ID is the suspected harassment communication ID, S205 is performed; or if the second communication ID is not the suspected harassment communication ID, S206 is performed.

For a process in which the server detects whether the second communication ID is the suspected harassment communication ID, reference may be made to the description that the server detects whether the first communication ID is the suspected harassment communication ID in FIG. 3A to FIG. 3C. FIG. 3A to FIG. 3C do not show a specific process of detecting whether the second communication ID is the suspected harassment communication ID.

S205: The server bans the first device ID and the first account ID that are associated with the first communication ID, and a second device ID and a second account ID that are associated with the second communication ID.

Both the first communication ID and the second communication ID are suspected harassment communication IDs, both the first device ID associated with the first communication ID and the second device ID associated with the second communication ID are suspected harassment device IDs, and both the first account ID associated with the first communication ID and the second account ID associated with the second communication ID are suspected harassment account IDs. Therefore, the server may ban the first device ID and the first account ID that are associated with the first communication ID, and the second device ID and the second account ID that are associated with the second communication ID.

For example, the first communication ID is the communication ID 1A, and the second communication IDs are the communication ID 1B and the communication ID 1C. Then, the server may ban the device 1 and the account 1 that are associated with the communication ID 1A, the device 1 and the account 2 that are associated with the communication ID 1B, and the device 2 and the account 1 that are associated with the communication ID 1C. That is, the server may ban the device 1, the account 1, the device 2, and the account 2. In this example, the second device ID and the second account ID are a device ID and an account ID that are directly associated with the second communication ID. Direct association may be understood as follows: The second communication ID is generated by the second device ID and the second account ID. For example, the second communication ID is the communication ID 1B, and the communication ID 1B is directly associated with the device 1 and the account 2. For example, the second communication ID is the communication ID 1C, and the communication ID 1C is directly associated with the device 2 and the account 1.

For details about banning an account, refer to the related description in the foregoing embodiments.

Banning a device means that the device cannot be used. For example, the device cannot send a message, the device cannot log in to the social communication application, or the device is powered on for use. A status of the device after the device is banned is not described in embodiments of this application.

In an embodiment, if a mobile phone number bound to the first account ID and the second account ID is further associated with another account, the server may further ban the another account associated with the mobile phone number bound to the first account ID and the second account ID.

In an embodiment, the second device ID and the second account ID include a device ID and an account ID that are directly and indirectly associated with the second communication ID. For direct association, refer to the related description above.

Indirect association may be understood as follows: The second device ID is a device ID directly or indirectly associated with a device ID (or an account ID) that generates the second communication ID, and the second account ID is an account ID directly or indirectly associated with a device ID (or an account ID) that generates the second communication ID. In an embodiment, indirect association may alternatively be understood as follows: The second communication ID is associated again or associated for a plurality of times based on an associated device ID or an associated account ID.

For example, the second communication ID includes the communication ID 1B and the communication ID 1C, the communication ID 1B is directly associated with the device 1 and the account 2, the communication ID 1C is directly associated with the device 2 and the account 1, the device 2 and an account 3 may generate a communication ID 1D, the account 3 and a device 3 may generate a communication ID 1E, and the account 2 and the device 3 may generate a communication ID 1F.

Although the communication ID 1C is not directly associated with the account 3 and the device 3, and the communication ID 1B is not directly associated with the device 3, the account 2 directly associated with the communication ID 1C has an association relationship with the account 3. Therefore, the communication ID 1C may be indirectly associated with the account 3, and the account 3 is also associated with the device 3. Therefore, the communication ID 1C may be indirectly associated with the device 3. Similarly, although the communication ID 1B is not directly associated with the device 3, because the account 2 directly associated with the communication ID 1B has an association relationship with the device 3, the communication ID 1B may be indirectly associated with the device 3.

In an embodiment, the server may directly ban the first device ID and the first account ID that are associated with the first communication ID, and the second device ID and the second account ID that are associated with the second communication ID. In an embodiment, the server may further detect whether a third communication ID is the suspected harassment communication ID; and ban a device ID and an account ID that are associated with the third communication ID when the third communication ID is the suspected harassment communication ID. It should be understood that the third communication ID may be understood as a communication ID (directly and indirectly) associated with the second device ID indirectly associated with the second communication ID, and a communication ID (directly and indirectly) associated with the second account ID indirectly associated with the second communication ID. For example, when the communication ID 1D is the suspected harassment communication ID, the account 3 may be banned; when the communication ID 1E is the suspected harassment communication ID, the account 3 and the device 3 may be banned; and when the communication ID 1F is the suspected harassment communication ID, the device 3 may be banned.

S206: The server does not respond.

When the first communication ID is not the suspected harassment communication ID, or when the first communication ID is the suspected harassment communication ID but the first communication ID is not the suspected harassment communication ID, the server does not respond, that is, does not ban the first device ID and the first account ID that are associated with the first communication ID, and the second device ID and the second account ID that are associated with the second communication ID, to avoid mis-banning.

In embodiments of this application, the server may parse the message log, and detect, with reference to data of the message sender (a communication ID) in the message log and the feature of the suspected harassment communication ID, whether the communication ID is the suspected harassment communication ID. There is massive data in the message log, detection accuracy is high, and the server does not analyze specific content of the message. Therefore, user privacy can be protected. In addition, the server does not ban only one account. Instead, the server bans devices, accounts, mobile phone numbers, and the like that are associated with the communication ID, to implement comprehensive banning. Moreover, in embodiments of this application, not only one communication ID is analyzed, but also whether another communication ID associated with an account and a device corresponding to the communication ID is the suspected harassment communication ID is analyzed. To be specific, in scenarios in which a plurality of accounts are logged in on one device, one account is logged in on a plurality of devices, and one mobile phone number is bound to a plurality of accounts, the server can perform association and comprehensive analysis, to implement comprehensive banning. This avoids a problem that another account is logged in on a same device or a new account is applied for by using a mobile phone number to continue to send a harassment message after an account is banned.

To more accurately detect whether the communication ID is the suspected harassment communication ID, in an embodiment, a feature in the feature library may be further added, to more accurately recognize the suspected harassment communication ID.

For example, the feature in the feature library may further include: Messages are sent in a same time period in a plurality of consecutive days (for example, three days); a message sending time period is concentrated in the early morning; no message is sent in a time period other than the early morning; and a proportion of a quantity of messages sent by the communication ID to the message receiver being 1 is 100%.

In an embodiment, the early morning (for example, 1:00 a.m. to 3:00 a.m.) may be replaced with a preset time period. For example, the preset time period is 4:00 p.m. to 6:00 p.m. or the like, the concentrated time period may be customized, and there may be at least one concentrated time period.

In this embodiment, the aggregation process of the server may further include the following:

7. After aggregating the message sending time period of the communication ID, the server may query a message sending time period of the communication ID in the previous three days, to detect whether the communication ID sends the messages in the same time period in the three consecutive days. For example, through aggregation processing, the server obtains that the communication ID sends the messages from 4:00 p.m. to 5:00 p.m. and from 1:00 a.m. to 2:00 a.m. in the three consecutive days.

8. After the server aggregates the message sending time period of the communication ID, the server detects whether the message sending time period of the communication ID is concentrated in the early morning. For example, if the message sending time period that is of the communication ID and that is aggregated by the server is 4:00 p.m. to 5:00 p.m. and 1:00 a.m. to 2:00 a.m., the server may determine that the message sending time period of the communication ID is concentrated in the early morning.

9. In a case in which the message sending time period that is of the communication ID and that is aggregated by the server is concentrated in the early morning, the server may further detect whether the communication ID sends no message in another time period. As described above, the message sending time period of the communication ID is 4:00 p.m. to 5:00 p.m. and 1:00 a.m. to 2:00 a.m. on a day. That is, in addition to sending messages in the early morning, the communication ID also sends messages from 4:00 p.m. to 5:00 p.m.

10. After aggregating the proportion of the quantity of messages sent by the communication ID to the message receiver, the server needs to further detect whether the proportion of the quantity of messages sent by the communication ID to the message receiver is 100%.

When the server detects that the proportion of the quantity of messages sent by the communication ID to the message receiver is greater than or equal to the preset proportion, the server may further detect whether the proportion of the quantity of messages sent by the communication ID to the message receiver is 100%.

In an embodiment, the feature in the feature library may be customized by the user. For details, refer to the related description in FIG. 8a and FIG. 8b.

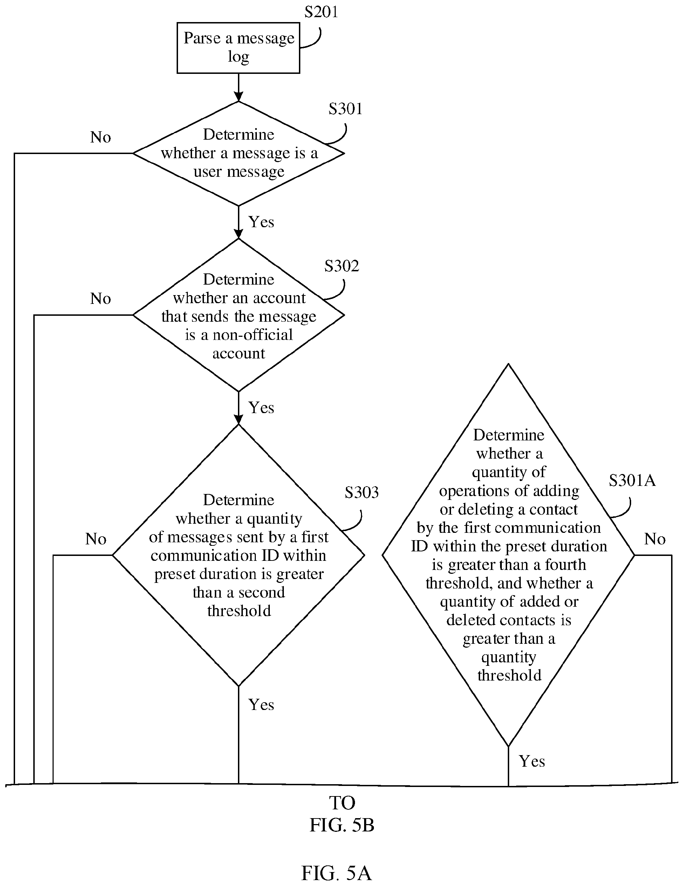

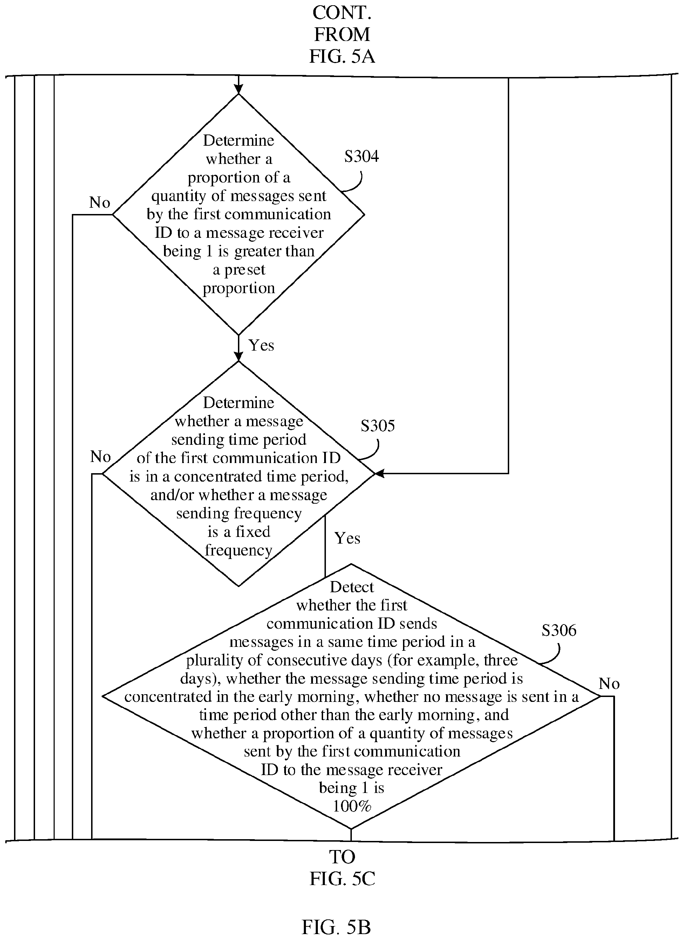

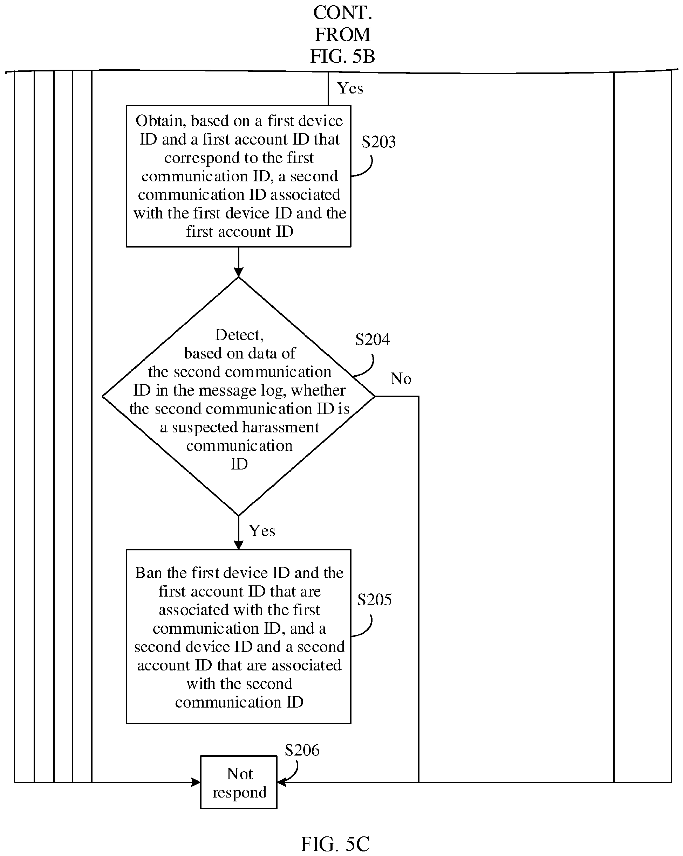

In this embodiment, based on the steps shown in FIG. 3A to FIG. 3C, with reference to FIG. 5A to FIG. 5C, the following steps may be further included after S305.

S306: Detect whether the first communication ID sends messages in a same time period in a plurality of consecutive days (for example, three days), whether a message sending time period is concentrated in the early morning, whether no message is sent in a time period other than the early morning, and whether a proportion of a quantity of messages sent by the first communication ID to the message receiver being 1 is 100%, where if the first communication ID sends the messages in the same time period in the plurality of consecutive days (for example, three days), the message sending time period is concentrated in the early morning, no message is sent in the time period other than the early morning, and the proportion of the quantity of messages sent by the first communication ID to the message receiver being 1 is 100%, S203 is performed; or if the first communication ID does not send the messages in the same time period in the plurality of consecutive days (for example, three days), the message sending time period is not concentrated in the early morning, messages are sent in the time period other than the early morning, and the proportion of the quantity of messages sent by the first communication ID to the message receiver being 1 is not 100%, S206 is performed.

In this embodiment, if the server detects that the first communication ID sends the messages in the same time period in the plurality of consecutive days (for example, three days), the message sending time period is concentrated in the early morning, no message is sent in the time period other than the early morning, and the proportion of the quantity of messages sent by the first communication ID to the message receiver being 1 is 100%, S203 may be performed.

In this embodiment, in performing S204, when detecting whether the second communication ID is the suspected harassment communication ID, the server also needs to detect whether the second communication ID sends messages in a same time period in a plurality of consecutive days (for example, three days), whether a message sending time period is concentrated in the early morning, whether no message is sent in a time period other than the early morning, and whether a proportion of a quantity of messages sent by the second communication ID to the message receiver being 1 is 100%.

In embodiments of this application, a detection feature for detecting whether the communication ID is the suspected harassment communication ID may be added, and the added detection feature matches the feature of the suspected harassment communication ID. Therefore, accuracy of detecting whether the communication ID is the suspected harassment communication ID can be improved.

In the foregoing embodiment, it is detected whether the communication ID satisfies the feature of the suspected harassment communication ID. When the communication ID satisfies the feature of the suspected harassment communication ID, a next feature is determined. When the communication ID does not satisfy the feature of the suspected harassment communication ID, it is determined that the communication ID is not the suspected harassment communication ID. In the foregoing embodiments, a one-size-fits-all approach (namely, an approach of yes and no) is adopted, and this approach is prone to misjudgment.

To improve accuracy of detecting whether the communication ID is the suspected harassment communication ID, and avoid a trouble caused by mis-banning, a confidence may be introduced in embodiments of this application. Each time the server detects whether the communication ID satisfies the feature of the suspected harassment communication ID, a confidence of the communication ID being the suspected harassment communication ID is increased once, instead of adopting the "yes and no" one-size-fits-all approach, to improve detection accuracy.

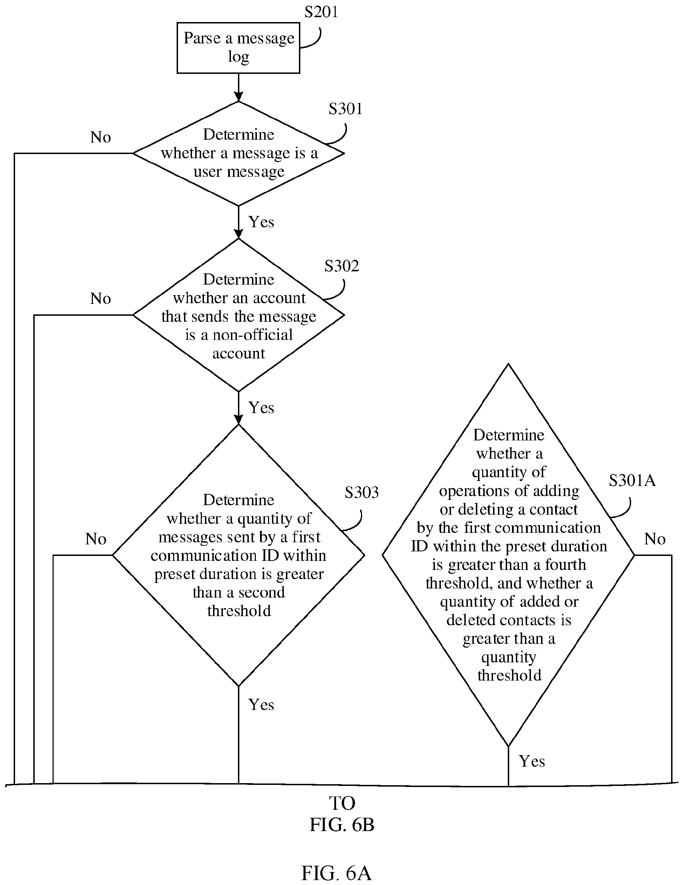

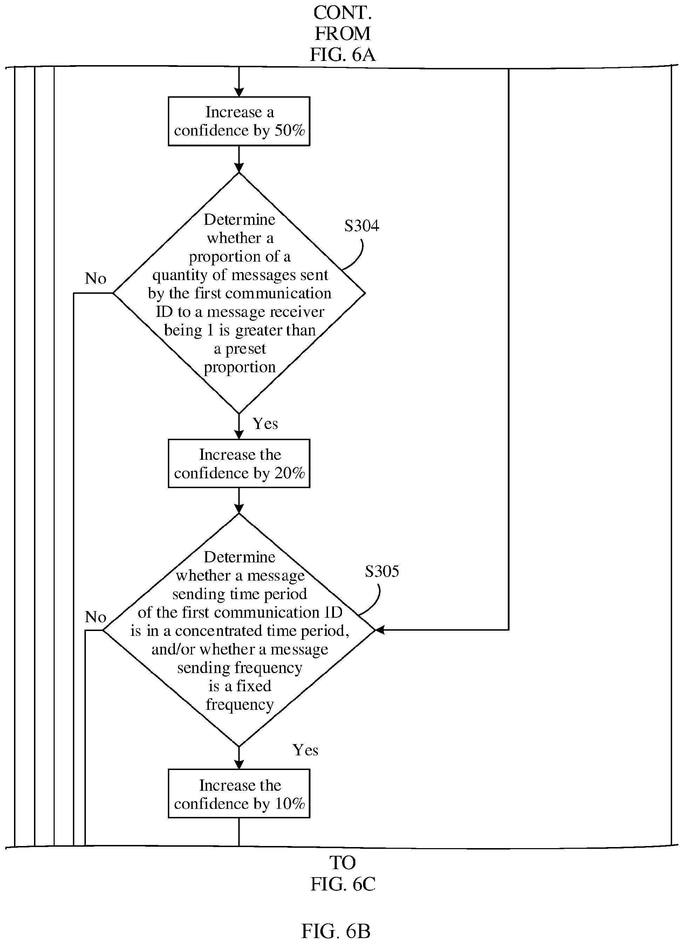

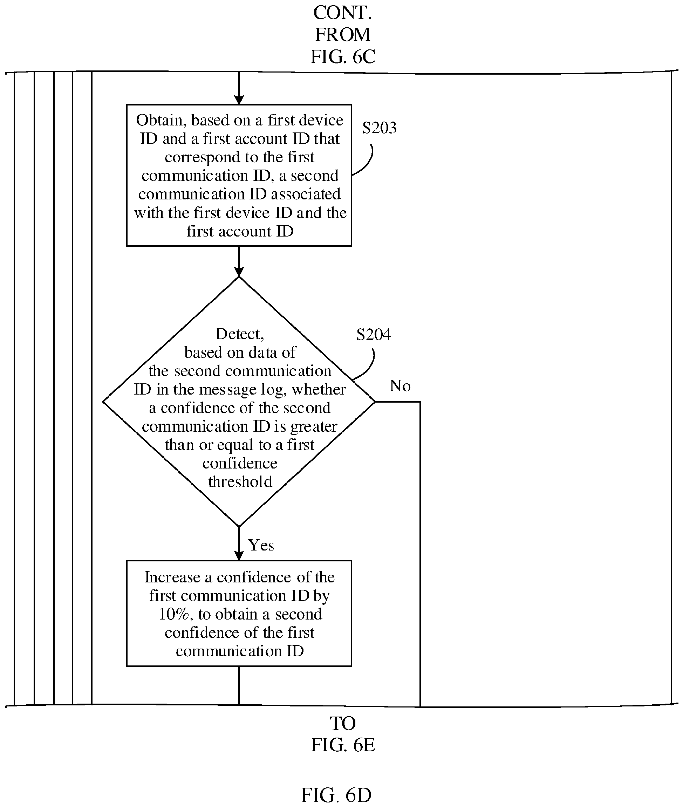

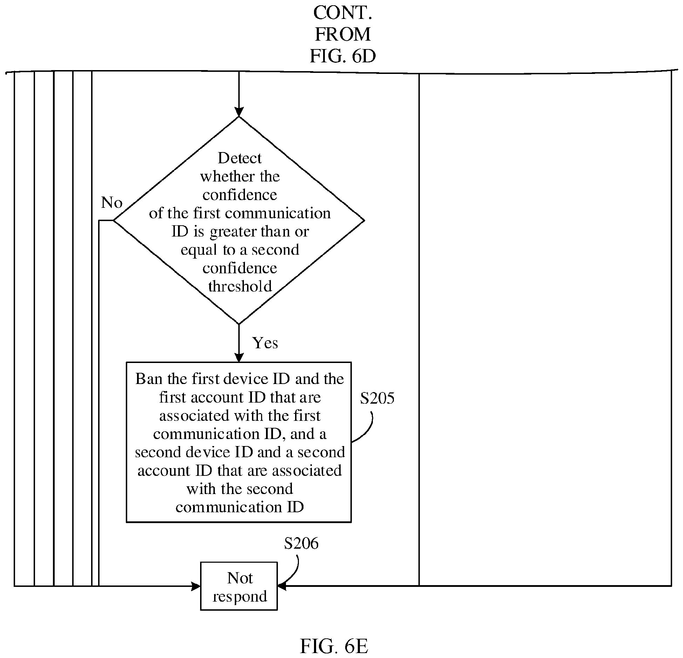

With reference to FIG. 6A, for example, when S303 is performed, if the quantity of messages sent by the first communication ID within the preset duration is greater than the second threshold, a confidence of the first communication ID being the suspected harassment communication ID may be increased by a first preset confidence, for example, 50% (in FIG. 3A to FIG. 3C, the confidence is increased by 50% for short). When S304 is performed, if the proportion of the quantity of messages sent by the first communication ID to the message receiver being 1 is greater than the preset proportion, the confidence of the first communication ID being the suspected harassment communication ID may be increased by a second preset confidence, for example, 20%. When S305 is performed, if the message sending time period of the first communication ID is in a concentrated time period, and/or a message sending frequency is a fixed frequency, the confidence of the first communication ID being the suspected harassment communication ID may be increased by a third preset confidence, for example, 10%.

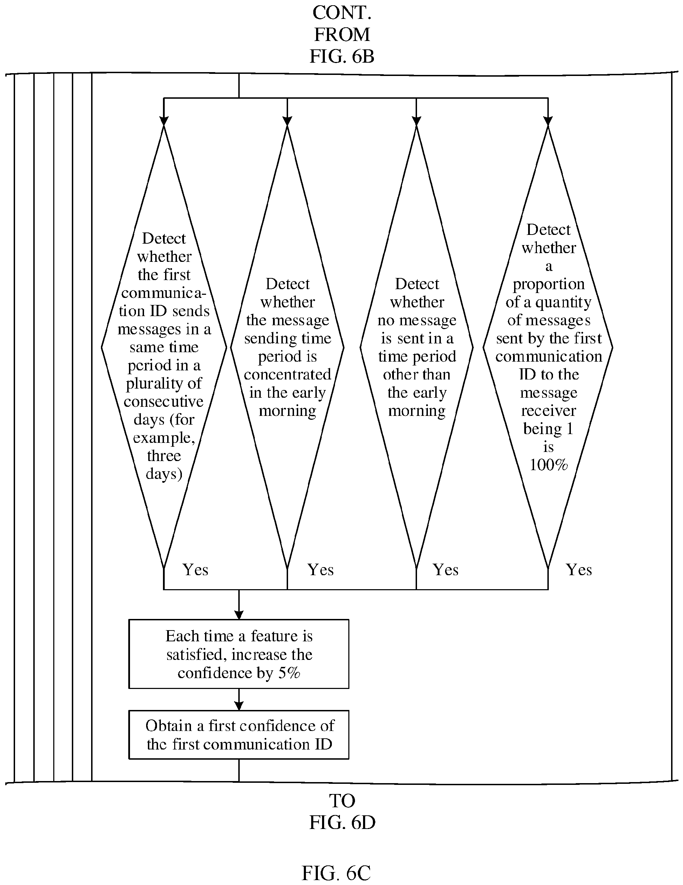

When S306 is performed, it needs to be detected whether the first communication ID satisfies four features of the suspected harassment communication ID. Each time a feature of one suspected harassment communication ID is satisfied, the confidence of the first communication ID being the suspected harassment communication ID may be increased by a fourth preset confidence, for example, 5%. For example, if the first communication ID sends messages in a same time period in a plurality of consecutive days (for example, three days), the confidence of the first communication ID being the suspected harassment communication ID may be increased by 5%. If the message sending time period of the first communication ID is concentrated in the early morning, the confidence of the first communication ID being the suspected harassment communication ID may be increased by 5%. If the first communication ID sends no message in a time period other than the early morning, the confidence of the first communication ID being the suspected harassment communication ID is increased by 5%. If the proportion of the quantity of messages sent by the first communication ID to the message receiver being 1 is 100%, the confidence of the first communication ID being the suspected harassment communication ID may be increased by 5%. It should be understood that FIG. 6C does not show a branch in which the first communication ID does not satisfy the feature in S306.

In this way, based on detection of the second communication ID, a first confidence of the first communication ID being the suspected harassment communication ID may be obtained.

In this embodiment, because determining of the confidence is introduced, when S204 is performed, the server may also obtain, based on detection of the data of the second communication ID, a confidence of the second communication ID being the suspected harassment communication ID. After obtaining the confidence of the second communication ID being the suspected harassment communication ID, the server may determine whether the confidence of the second communication ID being the suspected harassment communication ID is greater than or equal to a first confidence threshold (for example, 80%). If the confidence of the second communication ID being the suspected harassment communication ID is greater than or equal to the first confidence threshold (for example, 80%), the server may continue to increase the first confidence of the first communication ID by a fifth preset confidence, for example, 10%, to obtain a second confidence of the first communication ID.

In an embodiment, the server may detect whether the second confidence of the first communication ID is greater than or equal to a second confidence threshold (for example, 95%). If the second confidence of the first communication ID being the suspected harassment communication ID is greater than or equal to the second confidence threshold, it is determined that the first communication ID is the suspected harassment communication ID, and the server may ban the first device ID and the first account ID that are associated with the first communication ID, and the second device ID and the second account ID that are associated with the second communication ID. If the second confidence of the first communication ID being the suspected harassment communication ID is less than the second confidence threshold, it is determined that the first communication ID is not the suspected harassment communication ID, and the server may not respond.

If the confidence of the second communication ID being the suspected harassment communication ID is less than the first confidence threshold (for example, 80%), the server may detect whether the first confidence of the first communication ID is greater than or equal to the second confidence threshold (for example, 95%). If the first confidence of the first communication ID being the suspected harassment communication ID is greater than or equal to the second confidence threshold, it is determined that the first communication ID is the suspected harassment communication ID, and the server may ban the first device ID and the first account ID that are associated with the first communication ID, and the second device ID and the second account ID that are associated with the second communication ID. If the first confidence of the first communication ID being the suspected harassment communication ID is less than the second confidence threshold, it is determined that the first communication ID is not the suspected harassment communication ID, and the server may not respond.

The confidence is introduced in embodiments of this application. Each time the server detects whether the communication ID satisfies the feature of the suspected harassment communication ID, a confidence of the communication ID being the suspected harassment communication ID may be increased once, instead of adopting a "yes and no" one-size-fits-all approach, to improve detection accuracy.

Based on the embodiment shown in FIG. 6A to FIG. 6E, in embodiments of this application, the suspected harassment list may be further added, and whether the communication ID is included in the suspected harassment list is further added, to further add determining whether the communication ID is the suspected harassment communication ID, thereby further improving accuracy of detecting the communication ID.

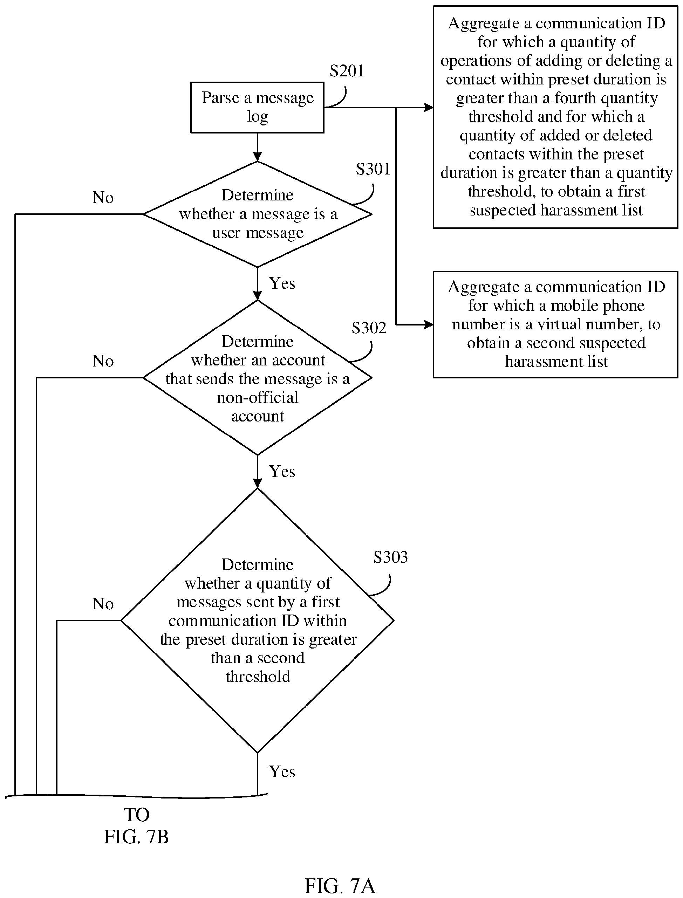

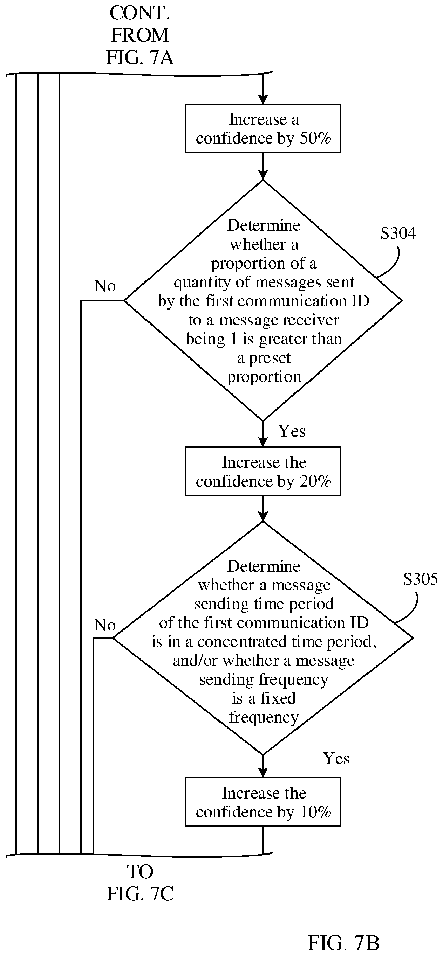

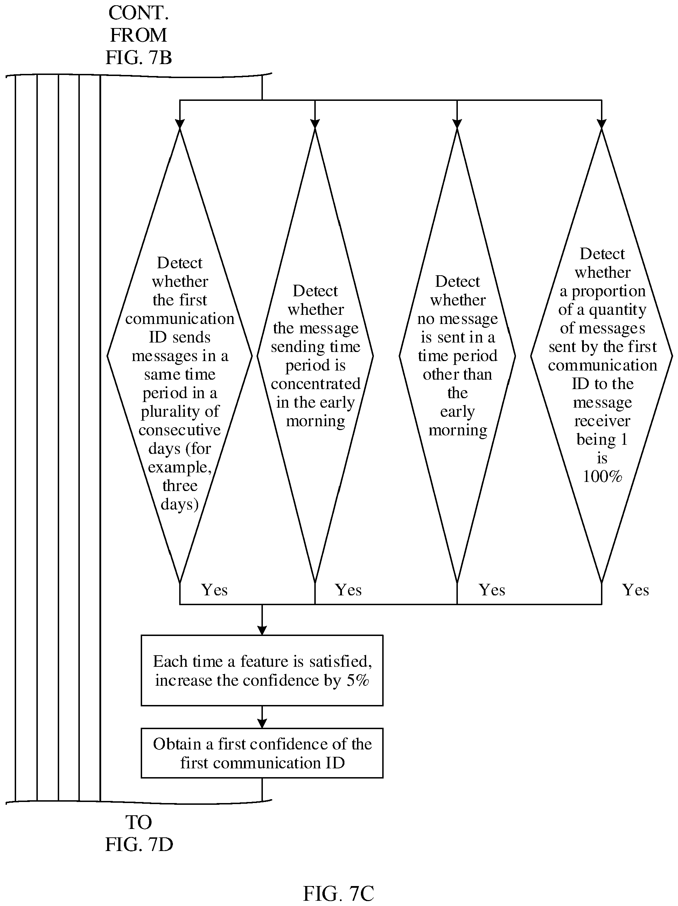

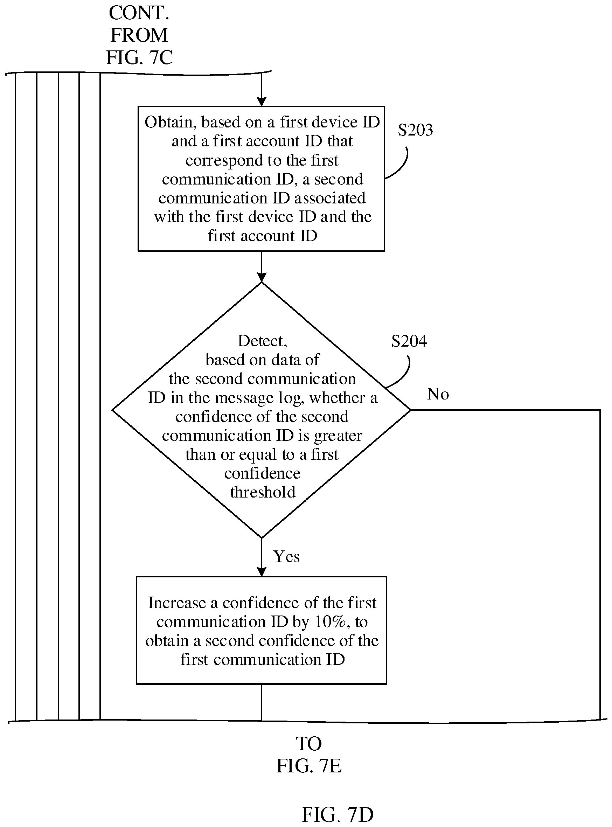

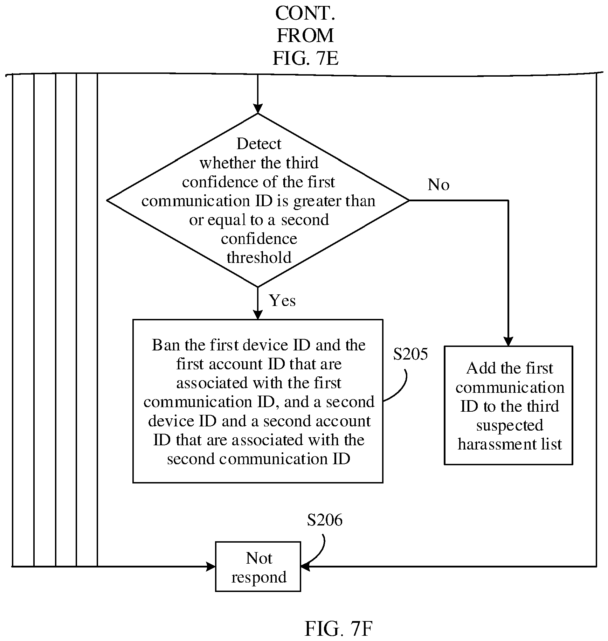

With reference to FIG. 7A, when S301Ais performed, the server may parse the message log to aggregate a communication ID for which a quantity of operations of adding or deleting a contact within the preset duration is greater than the fourth threshold and for which a quantity of added or deleted contacts is greater than the third quantity threshold, to obtain a first suspected harassment list.

In an embodiment, if a mobile phone number associated with the communication ID is a virtual mobile phone number, the mobile phone number is a suspected harassment mobile phone number to a large extent, and the communication ID is also a suspected harassment communication ID to a large extent. Therefore, the server may parse the message log to aggregate a communication ID for which the mobile phone number is s virtual number, to obtain a second suspected harassment list.

For example, a number segment of the virtual mobile phone number is within a preset number segment range, and the server detects whether the number segment of the mobile phone number is within the preset number segment range to determine whether the mobile phone number is a virtual mobile phone number. For example, a mobile phone number starting with 122 is a virtual mobile phone number, or a mobile phone number in a preset number segment range 122xxxxxxxx to 123xxxxxxxx is a virtual mobile phone number.

In an embodiment, according to the method shown in FIG. 6A to FIG. 6E, the server may obtain the second confidence of the first communication ID. When the second confidence is greater than or equal to the second confidence threshold, the server may determine that the first communication ID is the suspected harassment communication ID. When the second confidence is less than the second confidence threshold, the server may add the first communication ID to a third suspected harassment list. It should be understood that a second confidence of each communication ID in the third suspected harassment list is less than the second confidence threshold.

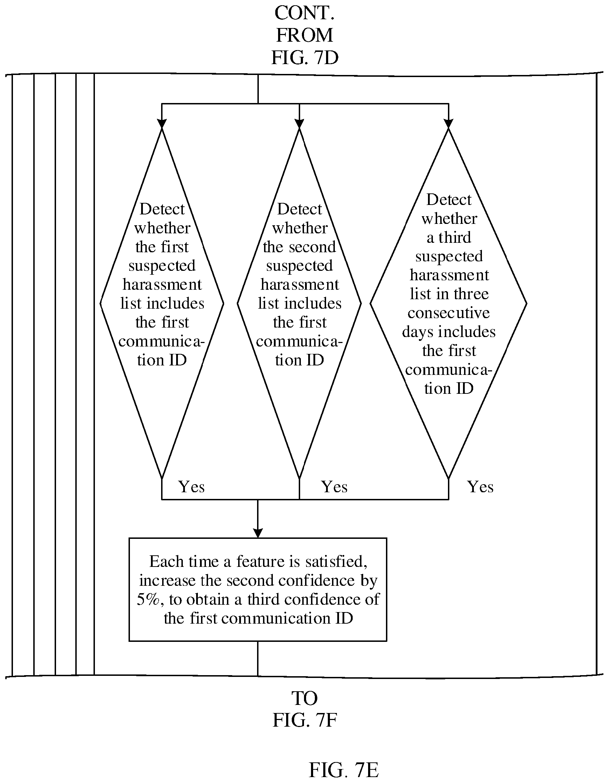

In this embodiment, with reference to FIG. 7E, after obtaining the second confidence of the first communication ID, the server may detect whether the first communication ID is included in the first suspected harassment list, the second suspected harassment list, and the third suspected harassment list (in three consecutive days). Each time the first communication ID is included in a suspected harassment list, a confidence of the first communication ID may be increased by a sixth preset confidence, for example, 5%. For example, if the first suspected harassment list includes the first communication ID, the confidence of the first communication ID may be increased by 5%. If the second suspected harassment list includes the first communication ID, a confidence of the second communication ID may be increased by 5%. If the third suspected harassment list (in three consecutive days) includes the first communication ID, the confidence of the second communication ID may be increased by 5%, so that a third confidence of the first communication ID may be obtained.

In this embodiment, the server may detect whether the third confidence of the first communication ID is greater than or equal to the second confidence threshold, to detect whether the first communication ID is the suspected harassment communication ID. If the third confidence of the first communication ID is greater than or equal to the second confidence threshold, it is determined that the first communication ID is the suspected harassment communication ID. If the third confidence of the first communication ID is less than the second confidence threshold, it is determined that the first communication ID is not the suspected harassment communication ID.

It should be understood that the confidence shown in FIG. 7A to FIG. 7F is an example for description, and the confidence may be customized.

In embodiments of this application, the suspected harassment list may be added, and whether the communication ID is included in the suspected harassment list is further added, to add determining whether the communication ID is the suspected harassment communication ID, thereby improving accuracy of detecting the communication ID.

The following describes a banning processing platform with reference to FIG. 8a and FIG. 8b. A user (an administrator) may perform operations such as a banning operation, an unbanning operation, a marking operation, an adding operation to a suspected harassment list, a query operation, and an operation of updating a feature library on the banning processing platform.

As described in the foregoing embodiments, when determining that the first communication ID is the suspected harassment communication ID, the server may ban the first device ID and the first account ID that are associated with the first communication ID, and the second device ID and the second account ID that are associated with the second communication ID. In an embodiment, when determining that the first communication ID is the suspected harassment communication ID, the server may display the first device ID and the first account ID that are associated with the first communication ID, and the second device ID and the second account ID that are associated with the second communication ID. The administrator performs an operation, and it is determined which specific devices and accounts are banned based on the operation of the administrator. In embodiments of this application, adding the operation of the administrator can improve banning accuracy, and avoid a trouble caused by mis-banning.

1. About a banning operation, an unbanning operation, a marking operation, and an adding operation to a suspected harassment list

In an embodiment, with reference to FIG. 8a, when determining that the first communication ID is the suspected harassment communication ID, the server may display, on an interface of the banning processing platform, "the first device ID and the first account ID that are associated with the first communication ID, and the second device ID and the second account ID that are associated with the second communication ID". For example, in FIG. 8a, the first communication ID is the communication ID 1A, the second communication IDs are, for example, the communication ID 1B and the communication ID 1C, and an association relationship among the communication ID, the device, the account, and the mobile phone number is represented in a form of a topology diagram. In FIG. 8a, the communication ID 1A, the communication ID 1B, and the communication ID 1C may be displayed, the communication ID 1A is associated with the device 1 and the account 1, the communication ID 1B is associated with the device 1 and the account 2, the communication ID 1C is associated with the device 2 and the account 1, and the account 1 is associated with a mobile phone number 1.

It should be understood that, in FIG. 8a, a partial association relationship is used for description. It may be figured out that the mobile phone number may also be associated with another account, the another account may also be associated with another device and another communication ID, and an association relationship thereof is a complex topology diagram. In an embodiment, the topology diagram may display statuses of the communication ID, the device, the account, and the mobile phone number.

The status is used to represent that the communication ID, the device, the account, and the mobile phone number are currently in a suspected harassment state, a banned state, an unbanned state, or the like. For example, the device 1 and the account 1 associated with the communication ID 1A, the device 1 and the account 2 associated with the communication ID 1B, the device 2 and the account 1 associated with the communication ID 1C, and the mobile phone number 1 associated with the account 1 are all in the suspected harassment state. In FIG. 8a, slash shadows represent the suspected harassment state.

The banned state indicates that the communication ID, the device, the account, and the mobile phone number are already banned. For example, a horizontal-line shadow may represent the banned state. The unbanned state indicates that the communication ID, the device, the account, and the mobile phone number are not banned. For example, a white shadow may represent the unbanned state. It should be understood that the statuses of the communication ID, the device, the account, and the mobile phone number may further be represented by using different colors, shapes, and the like. Details are not described in embodiments of this application.

When the administrator operates any communication ID, device, account, or mobile phone number, the banning processing platform may be triggered to display an operation list. For example, as shown in FIG. 8a, an example in which the user operates the device 1 is used. An operation list 80 may be displayed on the interface of the banning processing platform, as shown in FIG. 8b. The operation list 80 may include a banning control 81, an unbanning control 82, a marking control 83, and a suspected harassment list adding control 84.

The banning control 81 is configured to update the statuses of the device, the account, and the mobile phone number to the banned state.

The unbanning control 82 is configured to update the statuses of the device, the account, and the mobile phone number to the unbanned state.

The marking control 83 is configured to update the statuses of the device, the account, and the mobile phone number to the suspected harassment state.

The suspected harassment list adding control 84 is configured to add communication IDs to a suspected harassment list (for example, the first suspected harassment list, the second suspected harassment list, and/or the third suspected harassment list).

For example, the administrator operates the banning control 81. The banning processing platform may update the device 1 from the suspected harassment state to the banned state. Correspondingly, the banning processing platform may synchronize a status of the device 1 to the server, so that the server can ban the device 1.

Similarly, the administrator may further operate the unbanning control 82 to modify the statuses of the device, the account, and the mobile phone number that are banned by mistake, to trigger the server to perform unbanning on the device, the account, and the mobile phone number that are banned by mistake.

Similarly, the administrator may further operate the marking control 83 to update the device, the account, and the mobile phone number in the unbanned state to the suspected harassment state. In this way, the server may mark a communication ID associated with the device, the account, and the mobile phone number that are updated to the suspected harassment state as a suspected harassment communication ID, or add a communication ID associated with the device, the account, and the mobile phone number that are updated to the suspected harassment state to the suspected harassment list.

In an embodiment, the administrator performs an operation on "any communication ID, device, account, and mobile phone number", such as a double-click operation, which is different from an operation of triggering display of the operation list 80, to trigger the banning processing platform to display a message sent by the communication ID, the device, the account, and the mobile phone number. The administrator may determine whether to perform banning based on the message.

2. About a query operation

In an embodiment, with reference to FIG. 8a, the interface of the banning processing platform may further include a query box 85. The query box 85 is used to query statuses of any device, account, and mobile phone number.

For example, if the administrator enters any device, account, or mobile phone number in the query box 85, the banning processing platform may be triggered to display statuses of the device, the account, and the mobile phone number, and statuses of devices, accounts, and mobile phone numbers that are associated with the device, the account, and the mobile phone number, as shown in the topology diagram in FIG. 8a.

For example, if the administrator enters the account 1 in the query box 85, the banning processing platform may display, on the interface, a topology diagram shown in FIG. 8a.

3. About an operation of updating the feature library

It should be understood that the feature library includes features used to detect whether the communication ID is the suspected harassment communication ID.

For example, with reference to FIG. 7A to FIG. 7F, the feature library may include: whether a message type is a user message, whether an account type is a non-official account, whether the quantity of messages sent to the message receiver within the preset duration is greater than the second threshold, whether the proportion of the quantity of messages sent to the message receiver being 1 is greater than the preset proportion, whether the message sending time period is concentrated, whether the message sending frequency is fixed, whether messages are sent in a same time period in a plurality of consecutive days (for example, three days), whether the message sending time period is concentrated in the early morning, whether no message is sent in a time period other than the early morning, whether the proportion of the quantity of messages sent by the communication ID to the message receiver being 1 is 100%, whether the confidence of the second communication ID being the suspected harassment communication ID is greater than or equal to the first confidence threshold, whether the first communication ID is included in the first suspected harassment list, the second suspected harassment list, and the third suspected harassment list, and whether the third confidence of the first communication ID is greater than or equal to the second confidence threshold.

In an embodiment, the user may customize "a feature used to detect whether a communication ID is a suspected harassment communication ID" in the feature library. With reference to FIG. 8a, the interface of the banning processing platform may include a feature library editing area 86. The feature library editing area 86 includes an adding control 861, a deleting control 862, an editing control 863, and an activation failure control 864.

The administrator triggers the adding control 861 to add "the feature used to detect whether the communication ID is the suspected harassment communication ID" to the feature library. The administrator triggers the adding control 862 to delete "the feature used to detect whether the communication ID is the suspected harassment communication ID" from the feature library. The administrator triggers the editing control 863 to modify "the feature used to detect whether the communication ID is the suspected harassment communication ID" in the feature library. For example, if "a quantity of messages sent by the communication ID 1 in last day is greater than the second threshold, and the second threshold is 1000", the administrator may change the second threshold to 2000.

In addition, the administrator may change a confidence increased after each feature detection.

Moreover, the administrator may further operate the activation failure control 864 to trigger feature activation and invalidation in the feature library. For example, the administrator taps the activation failure control 864 once to activate a feature in the feature library, and trigger the server to use the feature in the feature library to detect whether the communication ID is the suspected harassment communication ID. The administrator taps the activation failure control 864 again to make a feature in the feature library invalid, and trigger the server not to use the feature in the feature library to detect whether the communication ID is the suspected harassment communication ID.

It should be understood that the banning processing platform may synchronize an operation performed by the administrator on the interface of the banning processing platform to the server, and the server may perform a corresponding operation based on the operation of the user. For example, after the administrator modifies a feature in the feature library, the banning processing platform may synchronize the modified feature to the server, to trigger the server to use the modified feature to detect whether the communication ID is the suspected harassment communication ID.

It should be understood that all styles displayed in FIG. 8a and FIG. 8b are examples for description. In embodiments of this application, display of the interface of the banning processing platform is not limited.

In embodiments of this application, the banning processing platform may be further provided, so that the administrator may perform operations such as a banning operation, an unbanning operation, a marking operation, an adding operation to a suspected harassment list, a query operation, and an operation of updating the feature library on the interface of the banning processing platform. In this way, human-machine interaction may be enhanced, and the user operation may be added, to improve accuracy of detecting the communication ID and improve user experience. In addition, the user may customize the feature used to detect whether the communication ID is the suspected harassment communication ID, that is, the feature is configurable. In this way, detection flexibility may be improved, and the administrator may continuously update and optimize the feature library, so that the feature in the feature library is more suitable for detecting the communication ID, and accuracy of detecting the communication ID may also be improved.

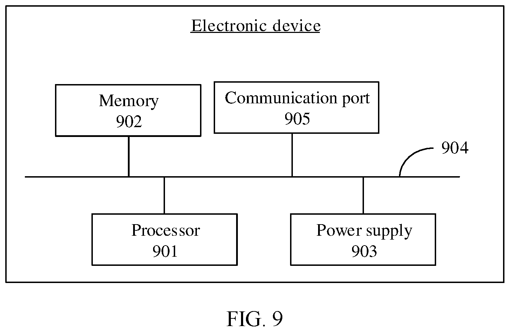

In an embodiment, an embodiment of this application further provides an electronic device. With reference to FIG. 9, the electronic device may be the server in the foregoing embodiments, and the electronic device may include a processor 901 (for example, a CPU) and a memory 902. The memory 902 may include a high-speed random access memory (random access memory, RAM), or may include a non-volatile memory (non-volatile memory, NVM), for example, at least one disk memory. The memory 902 may store various instructions, to complete various processing functions and implement the steps of the method in this application.

Optionally, the electronic device in this application may further include a power supply 903, a communication bus 904, and a communication port 905. The communication port 905 is configured to implement connection and communication between the electronic device and another peripheral device. In embodiments of this application, the memory 902 is configured to store computer-executable program code, and the program code includes instructions. When the processor 901 executes the instructions, the instructions enable the processor 901 of the electronic device to perform the actions in the foregoing method embodiments. Implementation principles and technical effects thereof are similar to those of the foregoing method embodiments, and details are not described herein again.

It should be noted that the modules or components in the foregoing embodiments may be configured as one or more integrated circuits for implementing the foregoing methods, for example, one or more application-specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling program code, the processing element may be a general-purpose processor, for example, a central processing unit (central processing unit, CPU) or another processor, such as a controller, that may invoke the program code. For another example, the modules may be integrated and implemented in a form of a system-on-a-chip (system-on-a-chip, SOC).

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive) (SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between the associated objects, and a character "/" in a formula usually indicates a "divisible" relationship between the associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A message processing method, comprising:
parsing a message log to obtain data of a first communication ID, wherein the first communication ID is associated with a first device ID and a first account ID;
detecting, based on the data of the first communication ID, whether the first communication ID is a suspected harassment communication ID;
in response to that the first communication ID is the suspected harassment communication ID, obtaining a second communication ID, wherein the second communication ID comprises a communication ID associated with the first device ID and a communication ID associated with the first account ID, and the second communication ID is different from the first communication ID;
detecting, based on data of the second communication ID in the message log, whether the second communication ID is the suspected harassment communication ID; and
in response to that the second communication ID is the suspected harassment communication ID, banning the first device ID, the first account ID, and a second device ID and a second account ID that are associated with the second communication ID, wherein the second device ID and the second account ID are a device ID and an account ID that are directly and indirectly associated with the second communication ID.

2. The method according to claim 1, wherein the detecting, based on the data of the first communication ID, whether the first communication ID is a suspected harassment communication ID comprises:
detecting, based on the data of the first communication ID and a feature of the suspected harassment communication ID, whether the first communication ID is the suspected harassment communication ID.

3. The method according to claim 2, wherein the feature of the suspected harassment communication ID comprises: a quantity of messages sent by a communication ID within preset duration is greater than or equal to a first quantity threshold, a proportion of a quantity of messages sent by the communication ID to a message receiver is greater than or equal to a preset proportion, a message sending time period is in a concentrated time period, and a message sending frequency is fixed; and
the detecting, based on the data of the first communication ID and a feature of the suspected harassment communication ID, whether the first communication ID is the suspected harassment communication ID comprises:
detecting whether a quantity of messages sent by the first communication ID within the preset duration is greater than or equal to the first quantity threshold;
if the quantity of messages sent by the first communication ID within the preset duration is greater than or equal to the first quantity threshold, detecting whether a proportion of a quantity of messages sent by the first communication ID to a message receiver is greater than or equal to the preset proportion;
if the proportion of the quantity of messages sent by the first communication ID to the message receiver is greater than or equal to the preset proportion, detecting whether a message sending time period of the first communication ID is in the concentrated time period, and/or whether a message sending frequency of the first communication ID is a fixed frequency; and
if the message sending time period of the first communication ID is in the concentrated time period, and/or the message sending frequency of the first communication ID is the fixed frequency, determining that the first communication ID is the suspected harassment communication ID.

4. The method according to claim 2, wherein the feature of the suspected harassment communication ID further comprises: a quantity of operations of adding or deleting a contact within preset duration by a communication ID is greater than a second quantity threshold, and a quantity of added or deleted contacts is greater than a third quantity threshold; and the method further comprises:
detecting whether a quantity of operations of adding or deleting a contact within the preset duration by the first communication ID is greater than the second quantity threshold, and whether a quantity of added or deleted contacts within the preset duration is greater than the third quantity threshold;
if the quantity of operations of adding or deleting the contact within the preset duration by the first communication ID is greater than the second quantity threshold, and the quantity of added or deleted contacts within the preset duration is greater than the third quantity threshold, detecting whether a message sending time period of the first communication ID is in a concentrated time period, and/or whether a message sending frequency is a fixed frequency; and
if the message sending time period of the first communication ID is in the concentrated time period, and/or the message sending frequency is the fixed frequency, determining that the first communication ID is the suspected harassment communication ID.

5. The method according to any one of claims 2 to 4, wherein the message sent by the first communication ID is a user message, and the first account ID is a non-official account.

6. The method according to claim 3, wherein before the determining that the first communication ID is the suspected harassment communication ID, the method further comprises:
detecting whether the first communication ID sends messages in a same concentrated time period in a plurality of consecutive days, detecting whether the same concentrated time period is a preset time period, detecting whether the first communication ID sends no message except for the preset time period, and detecting whether a proportion of a quantity of messages sent by the first communication ID to the message receiver being 1 is 100%; and
if the first communication ID sends the messages in the same concentrated time period in the plurality of consecutive days, the same concentrated time period is the preset time period, the first communication ID sends no message except for the preset time period, and the proportion of the quantity of messages sent by the first communication ID to the message receiver being 1 is 100%, determining that the first communication ID is the suspected harassment communication ID.

7. The method according to claim 6, wherein the method further comprises:
in response to that the quantity of messages sent by the first communication ID within the preset duration is greater than or equal to the first quantity threshold, increasing a confidence of the first communication ID being the suspected harassment communication ID by a first preset confidence;
in response to that the proportion of the quantity of messages sent by the first communication ID to the message receiver is greater than or equal to the preset proportion, increasing the confidence of the first communication ID being the suspected harassment communication ID by a second preset confidence;
in response to that the message sending time period of the first communication ID is in the concentrated time period, and/or the message sending frequency is the fixed frequency, increasing the confidence of the first communication ID being the suspected harassment communication ID by a third preset confidence;
in response to each time the first communication ID satisfies any one of the following features of the suspected harassment communication ID, increasing the confidence of the first communication ID being the suspected harassment communication ID by a fourth preset confidence: the first communication ID sends the messages in the same concentrated time period in the plurality of consecutive days, the same concentrated time period is the preset time period, the first communication ID sends no message except for the preset time period, and the proportion of the quantity of messages sent by the first communication ID to the message receiver being 1 is 100%;
obtaining a first confidence of the first communication ID; and
detecting, based on the first confidence, whether the first communication ID is the suspected harassment communication ID.

8. The method according to claim 7, wherein the detecting, based on the first confidence, whether the first communication ID is the suspected harassment communication ID comprises:
obtaining, based on the data of the second communication ID, a confidence of the second communication ID being the suspected harassment communication ID;
if the confidence of the second communication ID being the suspected harassment communication ID is greater than or equal to a first confidence threshold, increasing the first confidence by a fifth preset confidence, to obtain a second confidence of the first communication ID; and
detecting, based on the second confidence, whether the first communication ID is the suspected harassment communication ID.

9. The method according to claim 8, wherein the method further comprises:
aggregating a communication ID for which a quantity of operations of adding or deleting a contact within the preset duration is greater than a second quantity threshold and for which a quantity of added or deleted contacts is greater than a third quantity threshold, to obtain a first suspected harassment list;
aggregating a communication ID for which a mobile phone number associated with an account ID is a virtual number, to obtain a second suspected harassment list;
detecting whether the first communication ID is comprised in the first suspected harassment list, the second suspected harassment list, and a third suspected harassment list, wherein a second confidence of each communication ID in the third suspected harassment list is less than a second confidence threshold; and
obtaining, based on a result of whether the first communication ID is comprised in the first suspected harassment list, the second suspected harassment list, and the third suspected harassment list, a third confidence of the first communication ID being the suspected harassment communication ID; and
the detecting, based on the second confidence, whether the first communication ID is the suspected harassment communication ID comprises:
detecting, based on the third confidence, whether the first communication ID is the suspected harassment communication ID.

10. The method according to claim 9, wherein the detecting, based on the third confidence, whether the first communication ID is the suspected harassment communication ID comprises:
in response to that the third confidence is greater than or equal to the second confidence threshold, determining that the first communication ID is the suspected harassment communication ID; or
in response to that the third confidence is less than the second confidence threshold, determining that the first communication ID is not the suspected harassment communication ID.

11. The method according to any one of claims 1 to 10, wherein the banning the first device ID, the first account ID, and a second device ID and a second account ID that are associated with the second communication ID comprises:
displaying an association relationship among the first device ID, the first account ID, the second device ID, and the second account ID; and
in response to an operation on a target object in the association relationship, banning the target object, wherein the target object is comprised in the first device ID, the first account ID, the second device ID, and the second account ID.

12. The method according to claim 11, wherein a mobile phone number associated with the first account ID is a first mobile phone number, and the displaying the first device ID, the first account ID, the second device ID, and the second account ID comprises:
displaying the first device ID, the first account ID, the second device ID, the second account ID, and the first mobile phone number.

13. An electronic device, comprising a processor and a memory, wherein
the memory stores computer instructions; and
the processor executes the computer instructions stored in the memory, so that the processor performs the method according to any one of claims 1 to 12.

14. A computer-readable storage medium, wherein the computer-readable storage medium stores a computer program or instructions, and when the computer program or the instructions are run, the method according to any one of claims 1 to 12 is implemented.

15. A computer program product, comprising a computer program or instructions, wherein when the computer program or the instructions are executed by a processor, the method according to any one of claims 1 to 12 is implemented.

16. A program product, wherein the program product comprises a computer program, the computer program is stored in a readable storage medium, at least one processor of a communication apparatus may read the computer program from the readable storage medium, and the at least one processor executes the computer program, so that the communication apparatus implements the method according to any one of claims 1 to 12.
